# EUROPÄISCHE PATENTSCHRIFT

(11) **EP 3 033 155 B1**
(45) Veröffentlichungstag und Bekanntmachung des Hinweises auf die Patenterteilung: **13.12.2017**
(21) Anmeldenummer: 14741524.4
(22) Anmeldetag: 11.07.2014
(51) Int. Cl.: B01D 3/08, B01D 7/00

(54) **APPARAT UND VERFAHREN ZUR VAKUUMAUFREINIGUNG**
APPARATUS AND METHOD FOR VACUUM PURIFICATION
APPAREIL ET PROCÉDÉ DE PURIFICATION SOUS VIDE

(30) Priorität: 13.08.2013 EP 13004019
(43) Veröffentlichungstag der Anmeldung: 22.06.2016
(73) Patentinhaber: Merck Patent GmbH, 64293 Darmstadt (DE)
(72) Erfinder: STOESSEL, Philipp, 60487 Frankfurt am Main (DE); FUCHS, Juergen, 65439 Floersheim (DE)
(86) Internationale Anmeldenummer: PCT/EP2014/001911
(87) Internationale Veröffentlichungsnummer: WO 2015/022043

(56) Entgegenhaltungen:
- EP-A1- 0 504 099
- DE-A1- 4 213 430
- DE-A1- 10 038 986
- DE-B- 1 130 793
- US-A- 4 389 794

## Beschreibung

Die vorliegende Erfindung betrifft ein Verfahren zur Vakuumaufreinigung chemischer Verbindungen sowie eine Apparatur zur Durchführung dieses Verfahrens.

Hochwertige organische, metallorganische und anorganische Verbindungen finden Einsatz in verschiedenartigen Anwendungen. So sind beispielsweise die APIs ("active pharmaceutical ingredients") Wirkkomponenten für pharmazeutische Anwendungen. Ein weiteres wichtiges Anwendungsfeld sind Materialien für Elektronikanwendungen, insbesondere im Bereich der organischen Elektronik, in der vor allem organische Halbleiter und organische Leiter zum Einsatz kommen. So sind im Bereich der organischen Elektronik beispielsweise organische Elektrolumineszenzvorrichtungen (OLEDs), organische Solarzellen (O-SCs), organische Dünnfilmtransistoren (O-TFTs), organische Feld-Effekt-Transistoren (O-FETs), organische integrierte Schaltkreise (O-ICs), organische Photodioden und organische Laserdioden (O-Laser) zu nennen.

All diesen Anwendungen ist Folgendes gemeinsam: Es werden in der Regel geringe Mengen Material verwendet, um die gewünschten Effekte zu erzielen. Andererseits werden an die verwendeten Materialien hohe Anforderungen gestellt, die hohe Reinheitsgrade erfordern. So ist es bei pharmazeutischen Wirkstoffen nötig, die Nebenkomponenten zu kennen und möglichst geringe (definierte) Mengen an Verunreinigungen, z. B. Metallverunreinigungen, zu erzielen, um nicht, neben den gewünschten Wirkungen, unerwünschte Nebenwirkungen durch die Verunreinigungen zu erhalten. Bei organischen Halbleitern sind viele Eigenschaften gerade vom möglichst geringen Gehalt an Spurenverunreinigungen abhängig. So können Eigenschaften wie Leitfähigkeit, Ladungsträgermobilität oder operative Lebensdauer durchaus um mehrere Größenordnungen verändert werden, wenn Verunreinigungen im Bereich von wenigen ppm vorliegen.

Die wenigsten der verwendeten Materialien werden direkt aus der Synthese mit ausreichender Reinheit erhalten. Meist sind aufwändige Reinigungsprozeduren notwendig, um die benötigten bzw. spezifizierten Reinheitsgrade zu erreichen. Diese bestehen beispielsweise aus (wiederholter) Umkristallisation, Soxhlet-Extraktion, kontinuierliche Heißextraktion, Säulenfiltration und/oder -chromatographie oder auch Zonenschmelzen.

Es hat sich bewährt, am Ende der Reinigungsprozedur eine Sublimation bzw. Feststoffdestillation anzuschließen und diese gegebenenfalls auch mehrfach zu wiederholen, um Lösemittelreste und anorganische Verunreinigungen wie Salze oder Metallspuren, welche aus katalytischen Kupplungsschritten oder Kesselabrieb vorhanden sind, zu entfernen. Weiterhin kann auch eine Stofftrennung durch fraktionierte Sublimation bzw. Destillation durchgeführt werden. Dieser abschließende Reinigungsprozess ist für zentrale Parameter der organischen elektronischen Vorrichtung, wie Verarbeitbarkeit, Effizienz, Spannung und Lebensdauer, von entscheidender Bedeutung.

Typischerweise wird das zu reinigende Material, welches bei Raumtemperatur fest ist, aus einem Vorratsgefäß (Sublimatoreinheit) im Vakuum aus dem festen oder flüssigen Zustand in die Gasphase überführt und an einer Kondensationseinheit wieder in die flüssige bzw. feste Phase überführt.

Nach dem Stand der Technik werden die folgende Sublimations- bzw. Feststoffdestillationsverfahren für Materialien im Molekulargewichtsbereich von ca. 400 g/mol bis 2000 g/mol und Sublimations- bzw. Verdampfungstemperaturen im Bereich von ca. 200 °C bis 500 °C eingesetzt:
1) Standardsublimation:
   Bei der Sublimation nach Stand der Technik wird das Sublimationsgut in einem evakuierten Gefäß durch eine Heizquelle erhitzt und schlägt sich als Sublimat an einem Kühler nieder. Übliche Bautypen sind z. B. in Houben-Weyl, 4. Ausgabe, Allgemeine Laborpraxis, Band I/1 und I/2 beschrieben.
2) Trägergassublimation:
   Bei der Trägergassublimation wird über das beheizte Sublimationsgut bei reduziertem Druck ein kontinuierlicher Gasstrom geleitet. Das Sublimat scheidet sich in einer kälteren Zone wieder ab. Übliche Bautypen sind z. B. in Houben-Weyl, 4. Ausgabe, Allgemeine Laborpraxis, Band I/1 und I/2 beschrieben.

Bei beiden Verfahren gibt es noch Verbeserungsbedarf, wie nachfolgend beschrieben:
1) Die Sublimation in einer Standardsublimationsapparatur beginnt bei Erreichen der Sublimationstemperatur an der Grenzfläche Sublimationsgut-Heizfläche. An dieser Stelle können jedoch die in die Gasphase übergegangenen Moleküle nicht in den Kondensationsbereich abtransportiert werden, da das über der Sublimationszone liegende Sublimationsgut den Weg versperrt. Eine Sublimation erfolgt also nur am Randbereich des Sublimationsguts, was dazu führt, dass die zum Übertritt in die Gasphase zur Verfügung stehende Fläche sehr klein ist. Dies bringt sehr kleine, in der Praxis unbefriedigende Sublimationsraten mit sich.
2) Eine Temperaturerhöhung zur Steigerung der Sublimationsraten führt zwar zur Sublimation von der Gesamtoberfläche des Sublimationsguts, jedoch ist die zum Erhalt praxistauglicher Sublimationsraten notwendige Überschreitung der Sublimationstemperatur aufgrund der sehr geringen Wärmeleitfähigkeit der Materialien häufig so groß, dass eine Zersetzung des Sublimationsguts eintritt. Die Zersetzung tritt typischerweise an der heißesten Stelle, der Grenzfläche Sublimationsgut-Heizfläche, ein. Dort bildet sich dann häufig eine Ascheschicht, die als Isolationsschicht zwischen der Grenzfläche Sublimationsgut-Heizfläche wirkt und damit den Wärmeeintrag in das Sublimationsgut weiter erschwert.
3) Die Sublimation in einer Trägergassublimationsapparatur führt in der Praxis zu ähnlichen Problemen. Auch hier wird durch schlechten Wärmeeintrag und die starke Überschreitung der notwendigen Sublimationstemperatur häufig die Veraschung der Materialien beobachtet. Außerdem werden die Materialien durch den Trägergasstrom häufig über einen großen Bereich der Apparatur verteilt bzw. verschleppt, was die Entnahme des Sublimationsguts stark erschwert. Zusätzlich sind die Apparaturen bedingt durch die Verwendung langer Glasrohre mit zum Teil bis zu 3 Meter Länge in der Praxis sehr unhandlich und komplex, und die Apparaturen sind sehr teuer, so dass eine wirtschaftliche Nutzung dieses Verfahrens schwierig ist.

Aufgrund der oben aufgeführten Probleme unterliegen viele der typischerweise in organischen Elektrolumineszenzvorrichtungen verwendeten Materialien, beispielsweise organometallische Ir- oder Pt-Komplexe, wie Ir(piq)₃ (Tris(phenylisochinolin)iridium(III)), oder als fluoreszierende Verbindungen eingesetzte Styrylamine der teilweisen oder vollständigen Zersetzung bei Sublimation mit den oben beschriebenen Standardsublimationsverfahren. Dasselbe gilt für viele weitere Materialien, die im Bereich der organischen Elektronik eingesetzt werden. Nur wenige sehr robuste Materialien lassen sich mit diesen Verfahren mit ausreichend großer Sublimationsrate ohne Zersetzung sublimieren.

Ein der eigentlichen Sublimation verwandtes Reinigungsverfahren ist die Feststoffdestillation: Einige Materialien, die bei Raumtemperatur fest sind, schmelzen, bevor praxistaugliche Sublimationsraten bzw. Verdampfungsraten erreicht werden. Diese werden nach dem Überführen in die Schmelze einer Feststoffdestillation unterzogen, wobei die Kondensation abhängig von der Kühlung der Kondensationseinheit im flüssigen oder festen Zustand erfolgen kann. Die Durchführung der Feststoffdestillation in Standardsublimationsapparaturen weist wiederum erhebliche Mängel auf. In diesem Fall ist zwar, bedingt durch Konvektion, der Wärmeeintrag in die Schmelze besser als im Falle der Sublimation eines Feststoffs, jedoch ist auch hier die Verdampfungsfläche, die der Grenzfläche Schmelze-Gasphase entspricht, konstruktionsbedingt klein. Dies führt in der Praxis zu geringen Verdampfungsraten. Zusätzlich treten zwei weitere Probleme auf: Das Schmelzgut enthält immer geringe Mengen, typischerweise 0.0001 % bis 1 %, flüchtiger Restlösemittel aus dem vorangegangenen nasschemischen Reinigungsprozess. Diese verdampfen beim Schmelzen des organischen Materials spontan und reißen Tröpfchen der Schmelze mit, die das am Kühler kondensierte Kondensat kontaminieren.

Ein weiteres Problem besteht darin, dass das Kondensat, das häufig als organisches Glas auf dem Kühler kondensiert, eine für organische Gläser typische sehr geringe Wärmeleitfähigkeit aufweist. Folglich kann die Kondensationswärme schon bei geringen Kondensatschichtdicken von typischerweise wenigen Millimetern nicht mehr ausreichend abgeführt werden, so dass sich das Kondensat am Kühler nicht mehr verfestigt, sondern vielmehr in flüssiger Form anfällt und vom Kühler wieder in die Schmelze zurücktropft. Dieses Phänomen begrenzt die in typischen Standardsublimationsapparaturen verarbeitbare Stoffmenge auf ca. 50 g, da der Temperaturstress bei Verdampfungsraten im Bereich von 10 g/h sonst so groß wird, dass eine merkliche Zersetzung eintritt.

Es ist daher die Aufgabe der vorliegenden Erfindung, hierfür technische Verbesserungen anzubieten. Insbesondere ist ein Verfahren wünschenswert, bei dem größere Materialmengen in geringerer Zeit und mit geringerer Zersetzung gereinigt bzw. sublimiert werden können. Erst durch die Bereitstellung eines solchen Verfahrens ist die Sublimation im technischen Maßstab sinnvoll möglich. Weiterhin ist es die Aufgabe der vorliegenden Erfindung, eine technische Verbesserung für die Sublimation thermisch empfindlicher Materialien anzubieten.

Überraschend wurde gefunden, dass Sublimationsverfahren effizienter und mit erheblich weniger oder ganz ohne Zersetzung durchgeführt werden können, wenn das Sublimationsgut unter Hochvakuum, also einem Vakuum von üblicherweise < 10⁻³ mbar aus einem rotierenden Gefäß sublimiert wird, wobei die Sublimationsapparatur eine vakuumdichte Kupplung aufweist, welche ausgewählt ist aus einer ferrofluidisch abgedichteten Drehdurchführung oder einer doppelt bzw. dreifach wirkenden Gleitringdichtung. Für manche Materialien, wie sie beispielsweise für organische Elektrolumineszenzvorrichtungen verwendet werden, wird erst durch ein solches Verfahren überhaupt die Sublimation möglich, während sich diese Materialien bei Standardsublimationsverfahren vollständig zersetzen.

Dieses Verfahren und eine Apparatur zur Durchführung dieses Verfahrens sind daher der Gegenstand der vorliegenden Erfindung.

Aus dem Stand der Technik sind Sublimations- und Destillationsverfahren bekannt, bei denen sich das Sublimations- bzw. Destillationsgut in einem rotierenden Gefäß befindet:
L. C. Craig et al. (Anal. Chem. 1950, 22, 1462) beschreiben ein Destillationsverfahren zur Abtrennung von Lösemitteln aus verdünnten Lösungen. Dieses Verfahren besteht darin, dass ein durch ein Wasserbad geheizter Kolben, in dem die Lösung vorgelegt wird, und ein Auffangkolben, in den das Lösemittel abdestilliert wird, durch einen Motor in Rotation versetzt werden. Dabei wird die Apparatur an eine Vakuumpumpe angeschlossen. Die Kupplung des rotierenden Kolben mit dem feststehenden Anschluss an die Vakuumpumpe erfolgt über einen mit Schlifffett gut gefetteten Kugelschliff. Dieses Verfahren eignet sich jedoch nicht zum Arbeiten unter Hochvakuumbedingungen, da das abdestillierte Lösemittel das Schlifffett des rotierenden Kugelschliffs anlöst. Dadurch wird die Apparatur bei längerem Betrieb, wie er insbesondere bei Arbeiten in größerem Maßstab vorliegt, undicht, was wiederum die Verwendung von Hochvakuum verhindert. Außerdem enthält das gereinigte Produkt Verunreinigungen durch Schlifffett, die für die Synthese hochreiner Verbindungen nicht erwünscht sind. Daher hat sich dieses Verfahren technisch nicht durchgesetzt und wurde in Folge durch andere Verfahren abgelöst.

Als Weiterentwicklung ist die Abtrennung von Lösemitteln mit einem Rotationsverdampfer zu nennen (z. B. CH 412800). In Rotationsverdampfern wird üblicherweise eine selbstdichtende Wellendichtung, insbesondere eine Lippendichtung, zur Dichtung zwischen rotierenden und statischen Bauteilen verwendet. Diese dichten jedoch nur bis zu einem Vakuumbereich von ca. 1 mbar und sind somit nicht geeignet für Verfahren im Hochvakuum. Zudem offenbart DE 10038986 A1 einen Rotationsverdampfer. Ein weiteres Verfahren zur Reinigung insbesondere kleinerer Mengen organischer Verbindungen ist die Kugelrohr-Destillation bzw. -Sublimation (z. B. Houben-Weyl, 4. Ausgabe, Allgemeine Laborpraxis, Band I/1 und I/2). Dabei werden die Verbindungen unter Vakuum aus einem rotierenden geheizten Kolben in einen rotierenden nicht geheizten Kolben destilliert oder sublimiert, wobei als Dichtung zwischen rotierenden und statischen Bauteilen wiederum üblicherweise eine Lippendichtung wie beim Rotationsverdampfer verwendet wird. Daher sind diese Apparaturen nicht für Verfahren im großen Maßstab unter Hochvakuum geeignet. Bei sehr kleinen Apparaturen, die sich jedoch nicht für Reinigungsverfahren im technischen Maßstab eignen, ist gegebenenfalls durch die hohe Saugleistung der Vakuumpumpe bei dem kleinen Apparaturvolumen und der geringen Leckrate ein besseres Vakuum als 1 mbar möglich. Eine Skalierung dieser Apparatur ist jedoch für Arbeiten unter Hochvakuum nicht möglich. Daher kann diese Apparatur nicht für die Sublimation im technischen Maßstab verwendet werden.

Gegenstand der Erfindung ist ein Verfahren zur Reinigung von bei Raumtemperatur festen chemischen Stoffen (das zu sublimierende Material, im Folgenden Sublimationsgut genannt), bei dem der Stoff im Vakuum erhitzt, in die Gasphase überführt und anschließend kondensiert wird, wobei das Gefäß, welches das Sublimationsgut enthält, während des Vorgangs rotiert, dadurch gekennzeichnet, dass das Verfahren in einer Apparatur durchgeführt wird, die zwischen dem rotierenden Teil und dem statischen Teil eine Rotationskupplung aufweist, welche ausgewählt ist aus einer ferrofluidisch abgedichteten Drehdurchführung oder einer doppelt bzw. dreifach wirkenden Gleitringdichtung wobei die Sublimationseinheit und die Kondensationseinheit von einem Rohr umgeben sind und das Vakuum an das umgebende Rohr angelegt wird. Eine Rotationskupplung ist eine Ankupplung einer rotierenden Welle an ein statisches Bauteil.

Mit dem erfindungsgemäßen Verfahren kann das Sublimationsgut aus dem festen Zustand oder aus der Schmelze in die Gasphase überführt werden. Ebenso kann die Kondensation in die feste oder in die flüssige Phase erfolgen, bevorzugt in die feste Phase. Unter einer Sublimation im eigentlichen Sinne wird der Übergang fest →- gasförmig → fest verstanden. Unter einer Feststoffdestillation im Sinne dieser Erfindung wird der Übergang fest (bei Raumtemperatur) →- flüssig (bei erhöhter Temperatur) → gasförmig →- fest oder flüssig (je nach Kühltemperatur) verstanden. Die Feststoffdestillation findet also aus der Schmelze statt. Das erfindungsgemäße Verfahren bezieht sich sowohl auf die Sublimation wie auch auf die Feststoffdestillation. Beide Verfahren werden im Folgenden einheitlich im Sinne dieser Erfindung als Sublimation bezeichnet.

Die organischen, metallorganischen oder anorganischen Stoffe, die für das erfindungsgemäße Verfahren eingesetzt werden können, sind zunächst nicht eingeschränkt, da sich das Verfahren generell für alle im gegebenen Druck- und Temperaturbereich verdampfbaren Verbindungen eignet. Da das vorliegende Verfahren eine besondere Reinigungsgüte erzielt, ist die Anwendung, wie eingangs beschrieben, für hochwertige Materialien, wie z. B. biologische bzw. pharmazeutische Wirkstoffe oder Materialien für organische Elektronikanwendungen, vor allem organische Halbleiter, geeignet.

Die chemischen Stoffe können organisch, metallorganisch oder anorganisch sein. Unter einer organischen Verbindung im Sinne dieser Erfindung wird eine Verbindung verstanden, welche mindestens ein Kohlenstoffatom, bevorzugt mehrere Kohlenstoffatome aufweist und welche nicht unter die nachfolgende Definition einer metallorganischen Verbindung fällt. Bevorzugt besteht die organische Verbindung überwiegend aus Kohlenstoff, Wasserstoff, Deuterium, Stickstoff, Sauerstoff, Silicium, Fluor, Chlor, Brom, Iod, Bor, Phosphor und Schwefel. Auch Verbindungen, in denen Kohlenstoff an Nichtmetalle gebunden ist, fallen unter die Definition organischer Verbindungen. Unter einer metallorganischen Verbindung im Sinne dieser Erfindung wird eine Verbindung verstanden, in der mindestens ein organischer Ligand an ein Metall koordiniert, wobei die Koordination über Kohlenstoff oder ein anderes koordinierendes Atom erfolgen kann und wobei "organischer Ligand" bedeutet, dass der Ligand mindestens ein Kohlenstoffatom aufweist. Unter einer anorganischen Verbindung im Sinne dieser Erfindung wird entweder eine Metallverbindung verstanden, die nicht unter die oben aufgeführte Definition einer metallorganischen Verbindung fällt, oder eine anorganische Molekülverbindung, welche keine Metalle enthält.

Beispielhafte Klassen pharmazeutischer Wirkstoffe, für die das erfindungsgemäße Verfahren verwendet werden kann, sind v. a. solche, die geeignete thermische Stabilität aufweisen. Derartige Substanzen sind im Überblick beispielsweise beschrieben in "Lehrbuch der Pharmakologie und Toxikologie" (E. Mutschler et al., Wissenschaftliche Verlagsgesellschaft, Stuttgart 2003**),** "Allgemeine und spezielle Pharmakologie und Toxikologie" (K. Aktories *et al.*) und im "Deutschen Arzneibuch 2004". In der Regel geht hohe thermische Stabilität einher mit einem relativ hohen Anteil an aromatischen oder heteroaromatischen Strukturelementen. Diese finden sich beispielsweise in Wirkstoffen basierend auf den Strukturelementen Benzodiazepine, Dibenzoazepine, Amphetamine, Methadone, Heteroaryl- oder Arylsubstituierte Essig- und Propionsäurepräparate, Alkaloidpräparate, Isochinolin-basierte Substanzen, Stilben- oder Diphenylmethanbasierte Substanzen.

Typische organische Halbleiter, für die das erfindungsgemäße Verfahren verwendet werden kann, basieren in der Regel auf ausgedehnten cyclischen, linearen oder verzweigten konjugierten Systemen, insbesondere aromatischen oder heteroaromatischen Einheiten, aber auch linear konjugierten Systemen, z. B. Stilben- oder Tolanderivaten. Darüber fällt auch eine Vielzahl metallorganischer Komplexe, sowohl von Hauptgruppenmetallen (z. B. Al- oder Be-Komplexe), als auch von Übergangsmetallen (z. B. Kupfer-, Platin- und Iridiumkomplexe) in diesen Bereich. Derartige Substanzen sind im Überblick beispielsweise in "Special Issue on Organic Semiconductors and Devices, Part B" (J. Polym. Sci., Part B: Polym. Phys. 2003, 41) beschrieben. Typische Strukturklassen sind beispielsweise lineare oder verzweigte Oligoarylene bzw. -heteroarylene, Spirobifluorenderivate, Indenofluorenderivate, Indenocarbazolderivate, Indolocarbazolderivate, Triarylaminderivate, erweiterte kondensierte Aromaten (z. B. Anthracen-, Naphthacen- oder Pentacenderivate), Graphene, substituierte Stilbenderivate und Oligostilbenderivate (z. B. Bis(diarylamino)-bisstyryl-arylene), Hydroxychinolin-basierte Aluminium-, Zink-, Berylliumkomplexe und orthometallierte Iridium- und Platinkomplexe, wie beispielsweise in WO 05/033244, WO 04/081017 oder WO 06/061182 beschrieben. Das erfindungsgemäße Verfahren kann weiterhin auch für Vorstufen eingesetzt werden, die nachfolgend weiter zum organischen Halbleiter umgesetzt werden, beispielsweise zur Sublimation von Monomeren, welche nachfolgend zu halbleitenden Polymeren umgesetzt werden.

Generell kann das erfindungsgemäße Verfahren für alle sublimierbaren Verbindungen gemäß dem Stand der Technik angewandt werden. Sublimierbar im Sinne der vorliegenden Erfindung ist eine Verbindung dann, wenn sie sich im verwendeten Temperaturbereich und im verwendeten Druckbereich ohne bzw. ohne wesentliche Zersetzung verdampfen lässt. Bevorzugte Temperatur- und Druckbereiche werden unten näher beschrieben. Die Sublimation ohne wesentliche Zersetzung im Sinne der vorliegenden Erfindung bedeutet, dass sich mindestens 90 %, bevorzugt mindestens 99 % der Verbindung unzersetzt sublimieren lassen.

Besonders gut geeignet ist das erfindungsgemäße Verfahren für die Reinigung organischer und metallorganischer Verbindungen, welche ein Molekulargewicht im Bereich von 300 bis 5000 g/mol, bevorzugt von 400 bis 2500 g/mol, besonders bevorzugt im Bereich von 450 bis 1500 g/mol aufweisen. Dabei handelt es sich bevorzugt um definierte organische oder metallorganische Verbindungen.

Beim erfindungsgemäßen Verfahren wird das Sublimationsgut in der Sublimatoreinheit (2) im Vakuum im Ofen (1) erhitzt und in die Gasphase überführt, wobei die Sublimatoreinheit während des Sublimationsvorgangs rotiert. Dabei liegt die Rotationsgeschwindigkeit bevorzugt im Bereich von 0.5 bis 100 min⁻¹, besonders bevorzugt im Bereich von 1 bis 20 min⁻¹, ganz besonders bevorzugt im Bereich von 1.5 bis 10 min⁻¹, insbesondere im Bereich von 2 bis 5 min⁻¹. Dabei wird die Rotation üblicherweise erst nach dem Hochheizen zugeschaltet, kann aber auch bereits vor dem Heizen zugeschaltet werden. Dabei wird die Temperatur soweit über die beim jeweiligen Druck gegebene Sublimations- bzw. Verdampfungstemperatur eingestellt, dass eine technisch sinnvolle Verdampfungsrate erzielt wird. Generell ist es bevorzugt, wenn die Verdampfungsrate möglichst hoch ist. Eine technisch sinnvolle Verdampfungsrate liegt je nach Anwendung und je nach Wirkstoffklasse im Bereich zwischen 10 und 1000 g/h. Je nach Verbindungsklasse kann auch bereits eine Verdampfungsrate im Bereich zwischen 1 und 10 g/h technisch sinnvoll sein. Dies ist insbesondere bei metallorganischen Verbindungen, wie sie für organische Halbleiter-Bauteile eingesetzt werden, sinnvoll sein, da es häufig schwierig ist, diese Verbindungen überhaupt unzersetzt zu sublimieren. Dabei kann die Verdampfung, wie oben beschrieben, sowohl aus dem Feststoff wie auch aus der Schmelze geschehen.

Die Sublimations- bzw. Verdampfungstemperatur der Verbindungen liegt dabei bei einem Druck im Bereich von 10⁻³ bis 10⁻⁶ mbar häufig höher als 200 °C und häufig auch höher als 250 °C. Dies gilt insbesondere für organische Halbleiter, wie sie üblicherweise in elektronischen Vorrichtungen eingesetzt werden.

Das Sublimationsgut wird bevorzugt bei einer Temperatur im Bereich von 200 °C bis 500 °C, besonders bevorzugt im Bereich von 250 °C bis 450 °C, ganz besonders bevorzugt im Bereich von 250 °C bis 400 °C in die Gasphase überführt. Dabei hängt die Sublimationstemperatur vom Material ab, wobei eine möglichst geringe Sublimationstemperatur und daher ein möglichst gutes Vakuum bevorzugt ist, um thermische Zersetzung zu vermeiden.

Das verwendete Vakuum liegt üblicherweise im Bereich von weniger als 10⁻³ bis 10⁻⁸ mbar, bevorzugt im Bereich von weniger als 10⁻³ bis 10⁻⁷ mbar, besonders bevorzugt im Bereich von 10⁻⁴ bis 10⁻⁶ mbar. Diese Werte gelten insbesondere für Verfahren, die ohne Trägergaseinspeisung durchgeführt werden. Die verwendeten Druckbereiche werden bevorzugt durch ein mehrstufiges Vakuumpumpensystem erreicht.

In einer Ausführungsform der Erfindung wird das Verfahren als fraktionierte Sublimation durchgeführt, das heißt, es werden mehrere Fraktionen des sublimierten Materials gesammelt. Eine solche fraktionierte Sublimation kann auch für die Auftrennung von Mischungen, beispielsweise für die Auftrennung von Stereoisomerenmischungen, verwendet werden.

Das erfindungsgemäße Verfahren wird bevorzugt bei dynamischem Vakuum durchgeführt. Die Apparatur ist also während der Durchführung des Verfahrens konstant mit dem Vakuumpumpensystem verbunden. Dies hat gegenüber statischem Vakuum den Vorteil, dass dadurch ein besseres Vakuum erreicht werden kann.

In einer weiteren Ausführungsform des erfindungsgemäßen Verfahrens wird das Verfahren unter Verwendung eines inerten Trägergases durchgeführt. Bei Verwendung von Trägergas wird das erfindungsgemäße Verfahren bevorzugt in einem Druckbereich von 10⁻¹ bis 10⁻⁴ mbar durchgeführt. Dadurch kann die Überführung in die Gasphase beschleunigt werden. Auf diese Weise ist es möglich, bei empfindlichen Substanzen die effektive Verdampfungs-/Sublimationstemperatur zu senken, um eine Zersetzung zu verhindern. Alternativ kann bei gleicher Temperatur eine höhere Sublimationsrate erreicht werden. Als Trägergas können generell inerte Gase verwendet werden, beispielsweise Stickstoff, Helium, Argon, Krypton, Xenon oder Schwefelhexafluorid. Wenn die Apparatur eine Kühlfalle aufweist, sollte jedoch ein Trägergas verwendet werden, welches nicht in der Kühlfalle kondensiert und damit die Kühlfalle blockiert. Wird die Kühlfalle auf der Temperatur von flüssigem Stickstoff (-196 °C) betrieben, eignet sich als Trägergas insbesondere Helium.

In einer weiteren Ausführungsform der Erfindung wird das Verfahren halbkontinuierlich durchgeführt. Dazu wird neues Sublimationsgut bevorzugt in der Schmelze in die Sublimatoreinheit zugeführt. Dies hat den Vorteil, dass immer nur wenig Sublimationsgut in der Sublimatoreinheit vorliegt, was somit nur einen geringen Temperaturstress für das Material bedeutet.

Das erfindungsgemäße Verfahren wird bevorzugt folgendermaßen durchgeführt: In die Sublimatoreinheit wird das Sublimationsgut, das bereits gut getrocknet sein sollte, vorgelegt. Die Apparatur wird geschlossen, und es wird Vakuum angelegt. In einer Ausführungsform der Erfindung wird zunächst ohne Rotation geheizt und die Rotation erst bei oder kurz vor Erreichen der eigentlichen Sublimationstemperatur zugeschaltet. Dadurch kann das Stauben des zu sublimierenden Materials verhindert oder zumindest reduziert werden. Dies gilt insbesondere, wenn das Material aus der Schmelze verdampft wird. Dabei ist es bevorzugt, wenn beim Heizen nicht direkt auf die Sublimationstemperatur geheizt wird, sondern wenn die Temperatur stufenweise erhöht wird, um zunächst bei geringerer Temperatur das Restlösemittel, das meist noch vorhanden ist, aus dem Produkt zu entfernen. Insbesondere bei Sublimation im größeren Maßstab ist es sinnvoll, die geeignete Sublimationstemperatur zunächst im kleineren Maßstab zu ermitteln. Wenn das Sublimationsgut geschmolzen ist bzw. wenn bei Sublimation aus dem festen Zustand die Sublimationstemperatur erreicht oder nahezu erreicht ist, wird die Rotation zugeschaltet. Nach Abschluss der Sublimation wird das sublimierte Material aus der bzw. den Kondensationseinheit(en) entnommen.

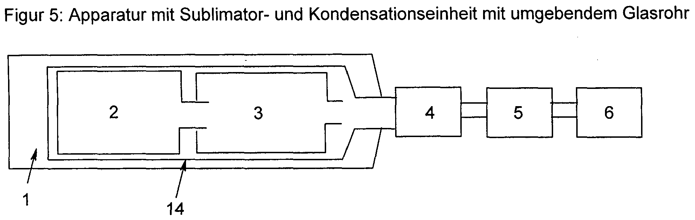

Eine Apparatur zur Durchführung des erfindungsgemäßen Verfahrens ist ebenfalls Gegenstand der vorliegenden Erfindung. Die erfindungsgemäße Apparatur ist schematisch in Figur 5 gezeigt.

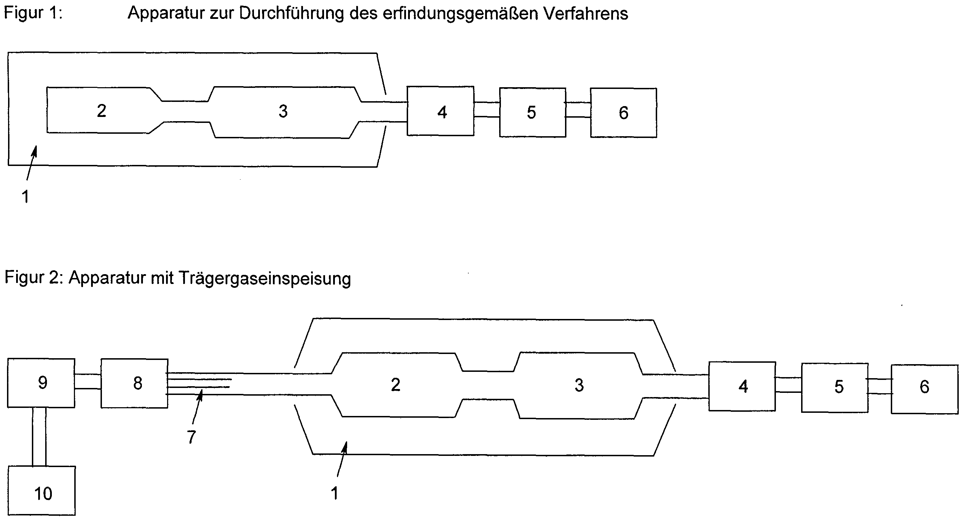

Ein weiterer Gegenstand der Erfindung ist daher eine Apparatur zur Sublimation chemischer Verbindungen, enthaltend einen Ofen (1), eine Sublimatoreinheit (2), eine Kondensationseinheit (3), die mit der Sublimatoreinheit in Kontakt steht, einen Rotationsantrieb (4) zur Rotation der Sublimator- und der Kondensationseinheit und eine Vakuumpumpe bzw. ein Vakuumpumpensystem (**6**), dadurch gekennzeichnet, dass die Apparatur zwischen dem rotierenden Teil und dem feststehenden Teil eine Rotationskupplung (**5**) aufweist, welche ausgewählt ist aus einer ferrofluidisch abgedichteten Drehdurchführung oder einer doppelt bzw. dreifach wirkenden Gleitringdichtung wobei die Sublimatoreinheit und die Kondensatoreinheit von einem Rohr umgeben sind und das Vakuum an das umgebende Rohr (14) angelegt wird. Im Folgenden wird die Apparatur, in der das Verfahren durchgeführt werden kann, detailliert beschrieben:
Der Ofen (**1**) in Figur 1 ist so abgebildet, dass er sowohl die Sublimatoreinheit (**2**) wie auch die Kondensationseinheit (**3**) umgibt. Hierfür ist es erforderlich, dass der Ofen unterschiedliche Temperaturzonen aufweist, wobei die Temperatur der Sublimatoreinheit höher ist als die der Kondensationseinheit. In einer alternativen Ausführungsform kann der Ofen (**1**) auch nur die Sublimatoreinheit (**2**) umgeben, während die Kondensationseinheit (**3**) außerhalb des Ofens angeordnet ist.

Generell kommen für den Ofen (**1**) alle Heizmethoden in Frage, wie sie gemäß dem Stand der Technik verwendet werden. Das Erhitzen kann sowohl indirekt (Gefäßwand /-mantel wird erhitzt, beispielsweise durch Heißluft, Heizbad, Heizmantel, Strahlungswärme, etc.) als auch direkt (beispielsweise über IR- oder Mikrowelleneinkopplung) geschehen. Es ist auch möglich, das Sublimationsgut mit Metallpartikeln (Kugeln) zu vermischen und diese Metallpartikel induktiv zu heizen. In einer bevorzugten Ausführungsform erfolgt das Heizen durch indirektes Erhitzen, bevorzugt durch heißes Gas, so dass es sich bevorzugt um einen Heißluftofen handelt. Diese Methode bietet den Vorteil, dass ein Heißluftofen durch dessen geringe Wärmekapazität schnell geheizt und nach Beendigung des Reinigungsvorgangs schnell wieder gekühlt werden kann. Weiterhin bietet diese Methode eine größere Sicherheit durch die Abwesenheit von Zündquellen. Auch ein aktiver Kühlvorgang durch Einleiten von Luft bei Raumtemperatur ist so möglich. Bevorzugt ist, wenn ein Ofen gewählt wird, mit dem die gewünschte Temperatur selektiv eingestellt und kontrolliert geregelt werden kann. Dadurch wird der thermische Stress der teilweise temperaturempfindlichen Materialien reduziert und die Zersetzung der Materialien verringert. Es ist bevorzugt, wenn die Temperatur an verschiedenen Stellen im Ofen bestimmt wird, um den Prozess genau steuern zu können.

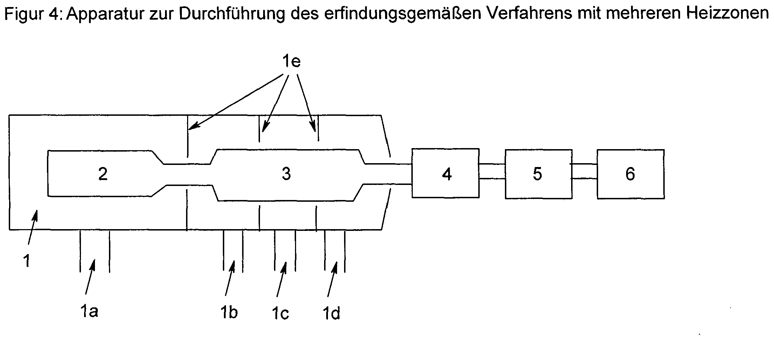

In einer bevorzugten Ausführungsform der Erfindung kann der Ofen (**1**) in verschiedene Heizzonen unterteilt werden, in denen jeweils selektiv die Temperatur eingestellt werden kann, d. h. der Ofen ist bevorzugt so beschaffen, dass die Temperatureinstellung zonenweise möglich ist. Dies ist insbesondere bei Strahlungsöfen und Heißluftöfen möglich. So können beispielsweise mehrere Strahlungsquellen oder Heißluftquellen verwendet werden und die einzelnen Heizzonen im Ofen thermisch gegeneinander isoliert oder zumindest abgeschirmt werden. Dies ist schematisch in Figur 4 dargestellt, wobei (**1**) bis (**6**) dieselbe Bedeutung haben, wie für Figur 1 beschrieben. (**1a**) bis (**1d**) stehen für separate Heizquellen, wobei für die Temperaturen gilt: T₍₁ₐ₎ > T_{(1b)} > T_{(1c)} > T_{(1d)}. (**1e**) stellt die thermische Abschirmung der Heizzonen untereinander dar.

Dies kann deshalb Vorteile aufweisen, da dadurch auch die Kondensationseinheit in den Ofen eingebracht werden kann und so durch die unterschiedlichen Temperaturzonen des Ofens eine fraktionierte Sublimation und damit eine nochmals weitere Aufreinigung des Materials möglich ist.

In einer bevorzugten Ausführungsform der Erfindung wird bei Verwendung einer Heißluftquelle die Heißluft nicht direkt auf die Sublimatoreinheit geleitet, um ein Überhitzen der Gefäßwand und das damit verbundene Risiko der thermischen Zersetzung des Sublimationsguts zu vermeiden. Statt dessen wird die Heißluft bevorzugt zwischen der Heißluftquelle und der Sublimatoreinheit abgelenkt, beispielsweise durch ein dazwischen eingebrachtes statisches Blech (Ablenkblech, Prallblech) oder Metallgewebe, durch rotierende Ventilatorblätter oder eine andere geeignete Ablenkvorrichtung. Dadurch kann das gleichmäßige Erhitzen der gesamten Sublimatoreinheit erreicht werden.
Die Sublimatoreinheit (**2**) ist die Einheit, in die das Sublimationsgut eingebracht und aus der das Sublimationsgut verdampft wird, während die Kondensationseinheit (**3**) diejenige Einheit ist, an der das sublimierte Material kondensiert wird. Dabei kann die Kondensationseinheit aus einem oder mehreren Gefäßen bestehen.
Im Folgenden werden die Sublimatoreinheit (**2**) und die Kondensationseinheit (**3**) genauer beschrieben.

In einer Ausführungsform ist die Sublimatoreinheit (**2**) mit der Kondensationseinheit (**3**) vakuumdicht verbunden, beispielsweise durch einen Flansch, und das Vakuum wird direkt an die Sublimator- und Kondensationseinheit angelegt. Dies entspricht der schematischen Darstellung in Figur 1.

In der Ausführungsform der Erfindung sind die Sublimatoreinheit (**2**) und die Kondensationseinheit (**3**) von einem Rohr, beispielsweise einem Glasrohr, umgeben, und das Vakuum wird an das umgebende Glasrohr angelegt. Dieses Rohr ist beispielsweise mit einer Schliffverbindung oder einem Glas-Flachflansch an die restliche Apparatur verbunden. Die Sublimator- und die Kondensationseinheit werden in das umgebende Rohr eingeschoben. Diese Ausführungsform hat sich als vorteilhaft erwiesen, da sich dadurch das Beladen der Apparatur mit dem Sublimationsgut und das Entnehmen des sublimierten Materials einfacher gestaltet. Weiterhin ist es für diese Ausführungsform ausreichend, wenn das umgebende Rohr eine ausreichende Vakuumstabilität aufweist, während die Sublimator- und Kondensationseinheiten diese Anforderung nicht erfüllen müssen. Diese Ausführungsform ist in Figur 5 schematisch dargestellt, wobei die Einheiten (**1**) bis (**6**) dieselbe Bedeutung aufweisen, wie für Figur 1 beschrieben, und (**14**) für das Rohr steht, das die Sublimator- und die Kondensationseinheit umgibt. In dieser Ausführungsform der Erfindung sind die Sublimatoreinheit (**2**) und die Kondensationseinheit (**3**) üblicherweise nicht vakuumdicht miteinander verbunden, sondern nur lose aneinander gelegt bzw. ineinander geschoben.

Die Sublimatoreinheit (**2**) ist zunächst nicht eingeschränkt. So eignen sich z. B. Glasgefäße, Keramikgefäße, Gefäße aus Korund, Bornitrid oder Graphit oder auch Gefäße aus verschiedenen Stahl- oder Metallvarianten. Graphit weist den Vorteil auf, dass es sich auch induktiv heizen lässt. In einer bevorzugten Ausführungsform der Erfindung werden Glasgefäße verwendet. Bevorzugt wird Quarzglas oder Duranglas (Borosilicat 3.3) verwendet.

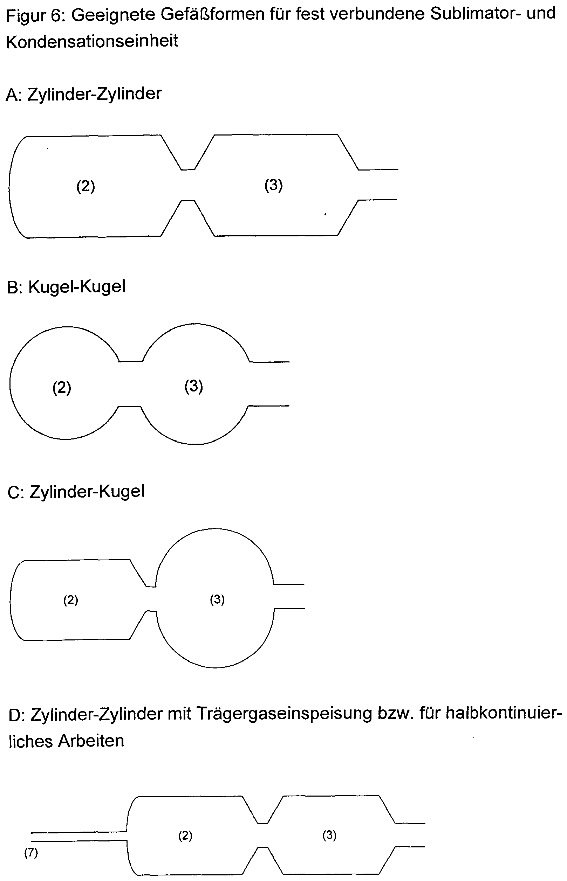

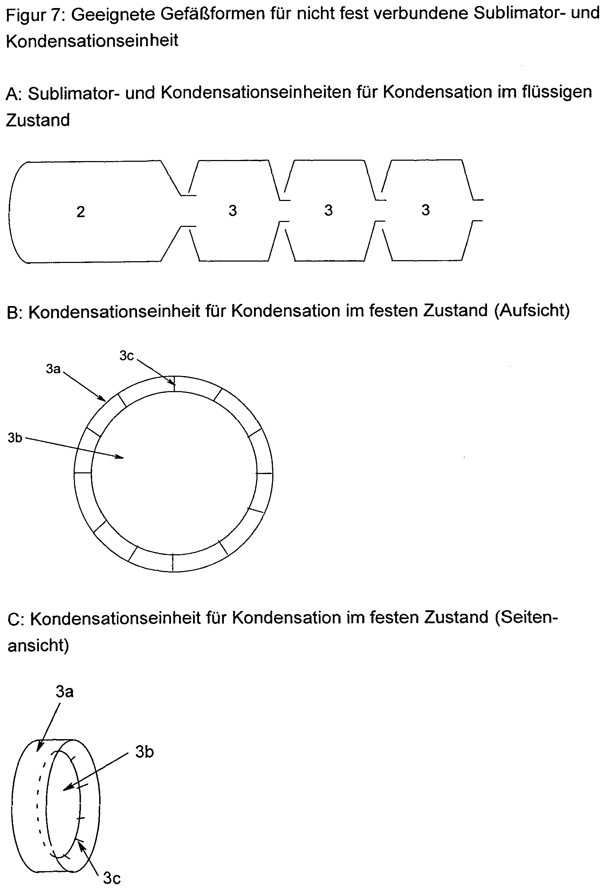

Die Gefäßgeometrie kann verschiedenartig sein (Figur 6 und 7). So sind Kugeln, zylindrische Gefäße, aber auch Röhren und weitere gekrümmte Formen möglich. In einer bevorzugten Ausführungsform der Erfindung wird als Sublimatoreinheit ein zylindrisches Gefäß mit abgerundetem bzw. nach außen gewölbtem Boden verwendet. Diese Gefäßform hat sich als besonders geeignet herausgestellt, da sie im Verhältnis zum Volumen eine größere Oberfläche aufweist als ein Rundkolben.

In einer Ausführungsform der Erfindung ist die Apparatur mit der Sublimator- und der Kondensationseinheit waagerecht angeordnet. In einer weiteren Ausführungsform der Erfindung wird die gesamte Apparatur und damit auch die Sublimator- und Kondensationseinheit gegenüber der Waagrechten geneigt, wobei bei Winkel von 1 bis 10° bevorzugt ist und die Sublimatoreinheit tiefer als die Kondensationseinheit angeordnet ist. Eine solche Neigung der Apparatur hat den Vorteil, dass die Sublimatoreinheit größere Materialmengen aufnehmen kann und sich somit die gleiche Apparatur für die Sublimation größerer Mengen eignet. Ein Nachteil ergibt sich durch die Neigung der Apparatur nicht, da das sublimierte Material in der Kondensationseinheit üblicherweise entweder in fester Form als Glas anfällt oder in flüssiger Form kondensiert und somit eine höhere Dichte aufweist, als das zu sublimierende Material, was üblicherweise in Pulverform in die Sublimatoreinheit eingefüllt wird.

In die Sublimatoreinheit (**2**) können zusätzlich zum Sublimationsgut noch Mahlkörper zugegeben werden. Diese führen zu einer besseren Durchmischung des Materials und damit zu einer gleichmäßigeren Temperaturverteilung und zu besseren Sublimationsraten. Weiterhin führen sie zu einer Zerkleinerung des Sublimationsgut, beispielsweise durch Zermahlen von Kristallen. Dadurch entsteht eine größere Oberfläche des Sublimationsguts, was wiederum zu einer schnelleren Sublimation führt. Als Mahlkörper werden bevorzugt Kugeln bzw. näherungsweise kugelförmige Körper verwendet. Diese weisen bevorzugt einen Durchmesser von 1 bis 10 mm auf, besonders bevorzugt von 2 bis 6 mm, wobei sich Kugelgemische mit unterschiedlichem Durchmesser als besonders geeignet erwiesen haben. Bevorzugte Materialien für die Mahlkörper sind gewählt aus Glas oder Metall, besonders bevorzugt aus Quarzglas oder Duranglas. Besonders bevorzugt sind die Mahlkörper aus demselben Material gewählt wie die Sublimationsapparatur.

Das verdampfte Material wird an der Kondensationseinheit (**3**) in einer weniger heißen Zone innerhalb des Ofens oder auch außerhalb des Ofens kondensiert. Die Kondensationseinheit rotiert üblicherweise mit derselben Geschwindigkeit wie die Sublimatoreinheit. Die Kondensationseinheit (**3**) kann fest mit der Sublimatoreinheit (**2**) verbunden sein (Figur 6). Die Sublimatoreinheit (**2**) und die Kondensationseinheit (**3**) können auch beispielsweise durch einen Flansch miteinander verbunden sein, wobei dieser durch die hohe Temperaturanforderung mit einer temperaturstabilen Dichtung, beispielsweise mit einer Kalrezdichtung, einer Golddichtung oder einer Graphitdichtung, gedichtet ist. Bevorzugt ist die Verbindung zwischen der Sublimatoreinheit (**2**) und der Kondensationseinheit (**3**) geheizt, damit in diesem Bereich kein Material sublimieren und damit die engere Verbindung zwischen den beiden Gefäßen blockieren kann. In einer bevorzugten Ausführungsform der Erfindung ist die Kondensationseinheit jedoch, wie oben beschrieben, nicht fest mit der Sublimatoreinheit verbunden (Figur 7). Dies erleichtert das Entnehmen des sublimierten Produktes sowie die Reinigung der Sublimator- und Kondensationseinheit. Wie oben beschrieben, ist es bevorzugt, wenn die Sublimator- und die Kondensationseinheit in ein Rohr eingeschoben werden, an das dann das Vakuum angelegt wird.

Die Kondensationseinheit (**3**) kann aus verschiedenen Materialien bestehen, beispielsweise aus Glas, Metall oder Keramik, aber auch aus Oberflächen mit geringen Oberflächenenergien, insbesondere mit Oberflächenenergien von weniger als 70 mN/m, beispielsweise PTFE, wie beispielsweise in DE 102005038211 beschrieben, wobei als Oberflächenenergie dieselbe Definition gelten soll, wie dort beschrieben. Ebenso eignet sich eine Kondensationseinheit aus Glas, Metall oder Keramik, welche mit einem Material mit geringer Oberflächenenergie, beispielsweise PTFE, beschichtet ist. In einer bevorzugten Ausführungsform der Erfindung besteht die Kondensationseinheit aus Glas. Dies hat den Vorteil, dass durch die Transparenz der Apparatur der Sublimations- und Kondensationsprozess verfolgt werden kann. Es ist auch möglich, die Kondensationseinheit aus mehr als einem entsprechenden Material zu konstruieren. Dies kann im Sinne eines Verbundmaterials, aber auch im Sinne einer Beschichtung erfolgen.

Für die Kondensationseinheit (**3**) kommen verschiedene Gefäßgeometrien in Frage, beispielsweise dieselben, wie sie oben für die Sublimatoreinheit beschrieben sind, wie zylinderförmige oder kugelförmige Einheiten. Die bevorzugte Geometrie der Kondensationseinheit hängt auch davon ab, ob das sublimierte Material im festen oder im flüssigen Zustand kondensiert.

Wenn das sublimierte Material im flüssigen Zustand kondensiert, ist die Kondensationseinheit bevorzugt zylinder- oder kugelförmig, insbesondere zylinderförmig, wobei sie an beiden Enden eine Verengung und eine Öffnung aufweist, an der sie lose oder mittels einer Dichtung mit der Sublimatoreinheit auf der einen Seite und gegebenenfalls mit der nächsten Kondensationseinheit, falls mehrere Kondensationseinheiten vorhanden sind, auf der anderen Seite oder mit zwei Kondensationseinheiten, falls mehrere Kondensationseinheiten vorhanden sind, verbunden ist. Dies ist schematisch in Figur 6A dargestellt. Bei weiterem Abkühlen erstarrt das in flüssigem Zustand kondensierte Material, wobei das feste Material häufig in Form eines Glases anfällt. Beim Erstarren löst sich das glasartige Material häufig auch direkt von der Kondensationseinheit und kann so nach Beendigung der Sublimation einfach entnommen werden. Falls sich das sublimierte Material nicht von selbst löst, wird es nach Beendigung der Sublimation aus der Kondensationseinheit mechanisch gelöst, beispielsweise durch Abkratzen.

Wenn das sublimierte Material direkt im festen Zustand kondensiert, kann ebenfalls die oben beschriebene Kondensationseinheit verwendet werden. Weiterhin haben sich für die Kondensationseinheit bei Kondensation im festen Zustand zylinderförmige Einheiten als geeignet erwiesen, welche innerhalb des Zylinderrings eine Scheibe aufweisen, an der die Kondensation des sublimierten Materials erfolgen kann. Dies ist schematisch in Figur 6B in der Aufsicht und in Figur 6C in der Seitenansicht für jeweils eine Kondensationseinheit dargestellt. Dabei steht (**3a**) für den äußeren Zylinderring, (**3b**) für die Scheibe, an der die Kondensation stattfindet und (**3c**) für die Verbindungen, die die Scheibe innerhalb des Zylinderrings stabilisieren. Für die fraktionierte Sublimation können mehrere dieser Einheiten aneinander gelegt werden, so dass mehrere solche Kondensationseinheiten vorliegen, die auf unterschiedliche Temperaturen geheizt werden können. Die Entnahme des sublimierten Materials nach Beendigung der Sublimation erfolgt üblicherweise mechanisch, beispielsweise durch Abkratzen.

Die Kondensationseinheit (**3**) wird dabei bei einer Temperatur betrieben, die weit genug unter der Sublimations- bzw. Verdampfungstemperatur (beim gegebenen Druck) liegt, um eine ausreichende Kondensation zu ermöglichen. Dabei kann die Kondensation in den flüssigen oder in den festen Zustand erfolgen. Bei kleineren Sublimationsvorrichtungen und bei kleinen Sublimationsraten kann hier bereits Luftkühlung bzw. Kühlung durch einen Gasstrom, beispielsweise ein Luft- oder ein Stickstoffstrom, ausreichend sein. Es kann aber auch zweckmäßig sein, die Kondensationseinheit ganz oder teilweise auf eine (konstant) niedrige Temperatur zu bringen, beispielsweise durch Wasserkühlung. Insbesondere kugelförmige Kondensationseinheiten weisen den Vorteil auf, dass diese einfach durch Eintauchen in ein Kühlbad, beispielsweise ein Wasser- oder Eisbad gekühlt werden können. Durch die Rotation der Einheit wird dabei die ganze Einheit gleichmäßig gekühlt. Bevorzugt wird die Kühltemperatur so gewählt, dass das Sublimat im glasartigen Zustand erhalten wird. Dies wird durch Kühlung unterhalb der Glasübergangstemperatur erreicht. Dadurch lässt sich das Sublimat leichter aus der Apparatur entnehmen. Im Allgemeinen ist das aktive Kühlen der Kondensationseinheit jedoch nicht erforderlich.

Je nach Produktspezifikation kann es, wie oben bereits beschrieben, sinnvoll bzw. erforderlich sein, statt nur einer Kondensationseinheit mehrere Kondensationseinheiten zu verwenden, beispielsweise mehrere hintereinander angeordnete Kolben oder Zylinder oder mehrere der oben genauer ausgeführten Kondensationseinheiten, die unterschiedlich temperiert werden, um auf diese Weise auch noch eine weitere Reinigung durch Auftrennung von mitverdampften Verunreinigungen zu bewirken. Ebenso kann auf diese Weise die Trennung von ansonsten nur schwer trennbaren Produktmischungen ermöglicht werden, beispielsweise die Trennung von Stereoisomeren eines Produktes. So wird beispielsweise die Trennung von Diastereomeren, z. B. Atropisomeren einer Verbindung, durch dieses Verfahren ermöglicht, während die Trennung durch Verfahren gemäß dem Stand der Technik, beispielsweise durch Sublimation gemäß dem Stand der Technik hier keine zufriedenstellenden Ergebnisse liefert.

Bei der Rotationskupplung (**5**) handelt es sich erfindungsgemäß um eine ferrofluidisch abgedichtete Drehdurchführung oder um eine doppelt oder dreifach wirkende Gleitringdichtung.

Die Rotation der Verdampfer-/Sublimator-Einheit kann z. B. so erfolgen, dass die Verdampfer-/Sublimator-Einheit auf einer Hohlwelle aus Metall oder Glas montiert wird. Diese Hohlwelle wird über einen Zahnriemen durch einen regelbaren Motor angetrieben. Dabei sollte sich jeweils die Umdrehungszahl sowohl regeln als auch kontrollieren lassen.

In Figur 1 sind weiterhin der Rotationsantrieb (**4**) und die Rotationskupplung (**5**) als separate Elemente abgebildet. In einer alternativen Ausführungsform der Erfindung kann der Rotationsantrieb auch in die Rotationskupplung integriert sein, so dass es sich hierbei um ein einziges Element handelt. Insbesondere für die ferrofluidisch abgedichtete Drehdurchführung ist eine solche Kombination aus Rotationsantrieb und Rotationskupplung kommerziell erhältlich.

Da das erfindungsgemäße Verfahren bevorzugt in einem Druckbereich bis zu 10⁻⁷ mbar durchgeführt wird, werden entsprechende Anforderungen an die Rotationskupplung gestellt. Erfindungsgemäß wird eine doppelt bzw. dreifach wirkende Gleitringdichtung (z. B. US 6976681) oder eine ferrofluidisch abgedichtete Drehdurchführung verwendet. Diese Rotationskupplungen sind allgemein im Stand der Technik bereits bekannt und sind kommerziell erhältlich. Da durch die Rotation der Kupplung Wärme erzeugt wird, kann es insbesondere bei größeren Sublimationsapparaturen bevorzugt sein, die Kupplung zu kühlen. Die Kühlung kann beispielsweise durch einen Gasstrom oder durch Wasser erfolgen.

Die erforderlichen Druckbereiche werden bevorzugt durch ein mehrstufiges Vakuumpumpensystem (**6**), bevorzugt durch ein zweistufiges Vakuumpumpensystem erreicht. Dabei erzeugt eine Vorpumpe mit einer Saugleistung von 5 - 50 m³/h, z. B. eine Ölpumpe, eine trockenlaufende Scrollpumpe, eine Drehschieberpumpe oder eine Rootspumpe ein Vorvakuum im Bereich von ca. 5 x 10⁻² bis 5 x 10⁻¹ mbar. Daran angeschlossen ist eine Hochvakuumpumpe, beispielsweise eine Turbomolekularpumpe oder eine Öldiffusionspumpe, mit welcher jeweils ein Vakuum im gewünschten Bereich erreicht werden kann. Es kann sinnvoll sein, zwischen der Vakuumpumpe und der eigentlichen Sublimationsapparatur eine Kühlfalle bzw. ein Baffle einzubauen, in der im Sublimationsgut enthaltene Lösemittelreste und weitere flüchtige Nebenprodukte kondensiert werden. Dadurch kann der Druck nochmals weiter gesenkt werden. Die Kühlfalle bzw. das Baffle dient weiterhin zur Schonung der Vakuumpumpe und der Verhinderung der Rückdiffusion von Pumpenbestandteilen wie z. B. Öl in die Apparatur. Die Kombination aus einer Scrollpumpe mit einer Turbomolekularpumpe bietet den Vorteil, dass sich hiermit ein absolut ölfreies Vakuum erzeugen lässt. Diese Kombination ist daher bevorzugt. Weiterhin kann die Apparatur ein Manometer zur Druckmessung der Apparatur aufweisen. Dies kann auch sinnvoll zur Verfolgung und Steuerung des Sublimationsprozesses sein, weil durch einen leichten Druckanstieg der Beginn der Sublimation und durch einen erneuten Druckabfall das Ende der Sublimation angezeigt wird.

Die Apparatur kann auch weitere Elemente aufweisen, die nicht zwingend erforderlich sind, deren Anwesenheit aber sinnvoll sein kann. So ist beispielsweise die Anwesenheit eines Thermometers und/oder eines Manometers sinnvoll zur Kontrolle des Sublimationsprozesses. Für große und dadurch schwere Apparaturen kann es auch sinnvoll oder erforderlich sein, dass die Sublimatoreinheit an deren geschlossenem Ende durch ein rotierendes Lager gestützt wird. Auch die Verwendung eines Prozesssteuerungssystems kann sinnvoll sein.

Eine Apparatur zur Durchführung einer Trägergassublimation erfordert weitere Elemente, beispielsweise eine Inertgaszuführung, wie in Figur 2 gezeigt. Die Bestandteile (**1**) bis (**6**) der Apparatur in Figur 2 haben dieselbe Bedeutung, wie für die Apparatur in Figur 1 beschrieben. Diese Apparatur weist weiterhin die folgenden Elemente auf:
(**7**) Gaszuleitungsrohr;
(**8**) Rotationskupplung;
(**9**) Dosierventil;
(**10**) Gasquelle.

Die Einspeisung des Trägergases, erfolgt bevorzugt coaxial in die Sublimatoreinheit. Dazu wird die Verdampfereinheit mit einem Trägergaseinspeisungsrohr (**7**) versehen, das den Ofen coaxial verlässt. Es kann bevorzugt sein, das Trägergas vor der Einspeisung in die Sublimatoreinheit vorzuheizen. Die Ankopplung an das statische Dosierventil (**9**), das mit der Gasquelle (**10**), beispielsweise einer Gasflasche, verbunden ist, kann durch eine weitere Rotationskupplung (**8**) erfolgen. Dabei handelt es sich bevorzugt ebenfalls um eine ferrofluidisch abgedichtete Drehdurchführung oder um eine doppelt oder dreifach wirkende Gleitringdichtung.

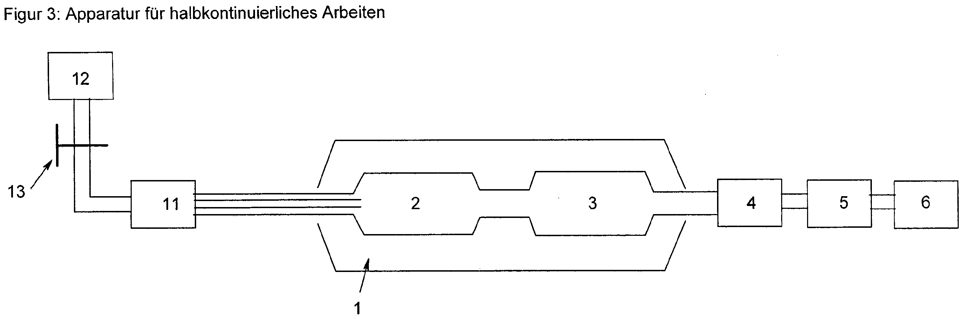

Eine Apparatur zum halbkontinuierlichen Arbeiten ist in Figur 3 gezeigt. Die Bestandteile (**1**) bis (**6**) der Apparatur in Figur 3 haben dieselbe Bedeutung, wie für die Apparatur in Figur 1 beschrieben. Diese Apparatur weist weiterhin die folgenden Elemente auf:
(**11**) Rotationskupplung;
(**12**) Vorratsgefäß;
(**13**) Dosiervorrichtung.

Dabei handelt es sich bei der Rotationskupplung (**11**) bevorzugt ebenfalls um eine ferrofluidisch abgedichtete Drehdurchführung oder um eine doppelt oder dreifach wirkende Gleitringdichtung.

Ebenso wie für die Trägergaszuführung verfügt auch die Apparatur für halbkontinuierliches Arbeiten über ein Zuleitungsrohr an einem Ende der Sublimatoreinheit. Dabei ist die Zuleitung in die Sublimatoreinheit prinzipiell von beiden Seiten der Sublimatoreinheit möglich. Dieses ist über eine weitere rotierende Dichtung (**11**) mit dem Vorratsgefäß (**12**) verbunden, welches das gegebenenfalls geheizte Material in flüssigem oder festen Zustand enthält. Dieses kann über einen Hahn oder eine andere Dosiervorrichtung (**13**) in die Sublimatoreinheit dosiert nachgefüllt werden. Es kann sinnvoll sein, wenn das Zuleitungsrohr geheizt ist, um die Zuleitung der Schmelze ohne Erstarren zu ermöglichen.

Da durch das erfindungsgemäße Verfahren bzw. mit der erfindungsgemäßen Apparatur hochreine Materialien aufgereinigt werden, ist auf größtmögliche Reinheit der Apparatur selber zu achten. So ist es bevorzugt, wenn sowohl die Sublimator- wie auch die Kondensationseinheit vor Durchführung einer Sublimation sehr gut gereinigt werden. Dafür kann auch ein Ausglühen bzw. Ausbrennen der entsprechenden Sublimatorund der Kondensationseinheit bevorzugt sein, wodurch Verunreinigungen thermisch zersetzt werden.

Das erfindungsgemäße Verfahren und die erfindungsgemäße Apparatur weisen gegenüber dem Stand der Technik folgende überraschende Vorzüge auf:
1. Durch das erfindungsgemäße Verfahren lassen sich pro Batch deutlich größere Mengen Material sublimieren, als dies gemäß dem Stand der Technik möglich ist.
2. Die thermische Belastung des zu sublimierenden Materials ist erheblich geringer als bei Vorrichtungen gemäß dem Stand der Technik. Dadurch lassen sich Verluste des Materials vermeiden. Für manche thermisch empfindliche Materialien, die sich bei Sublimation nach Stand der Technik vollständig zersetzen, wird erst durch das erfindungsgemäße Verfahren überhaupt die Sublimation möglich. Weiterhin wird durch den gleichmäßigen Wärmeeintrag keine oder zumindest deutlich weniger Veraschung des Materials beobachtet.
3. Die Sublimation verläuft durch die gute Durchmischung erheblich schneller als mit Apparaturen gemäß dem Stand der Technik, was einen deutlichen technischen Vorteil darstellt.
4. Auch für die Sublimation, bei der die Verdampfung aus der Schmelze erfolgt, bietet das erfindungsgemäße Verfahren erhebliche Vorteile. So ist außer den oben genannten Vorteilen hervorzuheben, dass Restlösemittel in der Schmelze hier unproblematisch sind, da durch die Rotation die gleichmäßige Verdampfung erreicht wird und Siedeverzüge durch verdampfendes Lösemittel vermieden werden. Dadurch wird die Verunreinigung des sublimierten Materials vermieden. Weiterhin ist es mit dem erfindungsgemäßen Verfahren unproblematisch, wenn die Verbindung im flüssigen und nicht im festen Zustand kondensiert, da hier kein Rückfluss des gereinigten in das noch nicht gereinigte Material erfolgen kann.
5. Das erfindungsgemäße Verfahren kann auch unter Verwendung von Trägergas durchgeführt werden, wodurch sich nochmals eine Beschleuigung des Sublimationsprozesses und außerdem eine Verringerung der Sublimationstemperatur ergibt. Daher ist dieses Verfahren besonders für thermisch empfindliche Substanzen geeignet.
6. Das erfindungsgemäße Verfahren kann auch halbkontinuierlich durchgeführt werden, wodurch die Sublimation im nochmals größeren Maßstab ermöglicht wird unter gleichzeitiger Reduzierung des thermischen Stresses für das zu sublimierende Material.

Die vorliegende Erfindung wird durch die folgenden Beispiele näher erläutert, ohne sie darauf einschränken zu wollen. Der Fachmann kann aus der Beschreibung und den aufgeführten Beispielen ohne erfinderisches Zutun weitere Ausführungsformen finden bzw. selbstverständlich weitere Materialien mit dem beschriebenen Verfahren aufreinigen. Insbesondere ist auch die Skalierung der Apparatur und das Arbeiten in größerem Maßstab ohne erfinderisches Zutun möglich.

### Beschreibung der Figuren

Die in den Figuren aufgeführten Ziffern werden in der Beschreibung oben und in den Ausführungsbeispielen ausführlich erläutert.
Figur 1: Apparatur zur Durchführung eines Verfahrens
Figur 2: Apparatur mit Trägergaseinspeisung
Figur 3: Apparatur für halbkontinuierliches Arbeiten
Figur 4: Apparatur zur Durchführung des Verfahrens mit mehreren Heizzonen
Figur 5: Apparatur mit Sublimator- und Kondensationseinheit mit umgebenden Glasrohr
Figur 6: Geeignete Gefäßformen für fest verbundene Sublimator- und Kondensationseinheit: A) Zylinder-Zylinder; B) Kugel-Kugel; C) Zylinder-Kugel; D) Zylinder-Zylinder mit Trägergaseinspeisung bzw. für halbkontinuierliches Arbeiten
Figur 7: Geeignete Gefäßformen für nicht fest verbundene Sublimator- und Kondensationseinheit: A) Sublimator- und Kondensationseinheiten für Kondensation im flüssigen Zustand; B) Kondensationseinheit für Kondensation im festen Zustand (Aufsicht); C) Kondensationseinheit für Kondensation im festen Zustand (Seitenansicht)
Figur 8: Gesamtansicht der erfindungsgemäßen Sublimationsapparatur, Konstruktionszeichnung

### Beispiele

### Beispiel 1: Aufbau einer Apparatur nach Stand der Technik zur Durchführung der Sublimation (Vergleich), Apparatur 1

Komponenten:
- 4-L Einhalsglaskolben aus Duran-Glas der Fa. Schott Mainz, versehen mit einem Kegelglasschliff Hülse-NS 45,
- 1 m langes Glasrohr (Innendurchmesser 40 mm), an einem Ende versehen mit einem Kegelglasschliff Kern-NS 45, am anderen versehen mit einem Flachflänsch,
- Regelbare Heizhaube,
- Turbo-Drag-Pumpenstand,
- Kühlfalle, befüllbar mit flüssigem Stickstoff.

Eine bestimmte Menge der zu sublimierenden Verbindungen MAT1 bis MAT6 wird im 4-L Einhalsglaskolben vorgelegt (s. Beispiel 4, Tabelle 2). Der Einhalskolben wird mit dem Glasrohr versehen, die Dichtung des Kegelglasschliff Kern-NS 45 erfolgt mit Teflonringen. Diese Einheit wird über den Flachflansch mit dem Turbo-Drag-Pumpenstand verbunden und in der regelbaren Heizhaube positioniert. Die Apparatur wird evakuiert bis im Ruhezustand ein Vakuum erreicht ist (s. Beispiel 4, Tabelle 2). Anschließend wird mittels der Heizhaube die Temperatur schrittweise in 20 °C Schritten bis zur in Tabelle 3 angegebenen Sublimationstemperatur erhöht. Nach beendeter Sublimation lässt man die Apparatur auf Raumtemperatur erkalten, hebt das Vakuum auf, entfernt das Sublimat, das sich an der oberen Kolbenhälfte angesammelt hat, mechanisch und führt es der Reinheitsanalytik via NMR bzw. HPLC zu.

### Beispiel 2: Aufbau einer Apparatur zur Durchführung der Sublimation, Aparatur 2

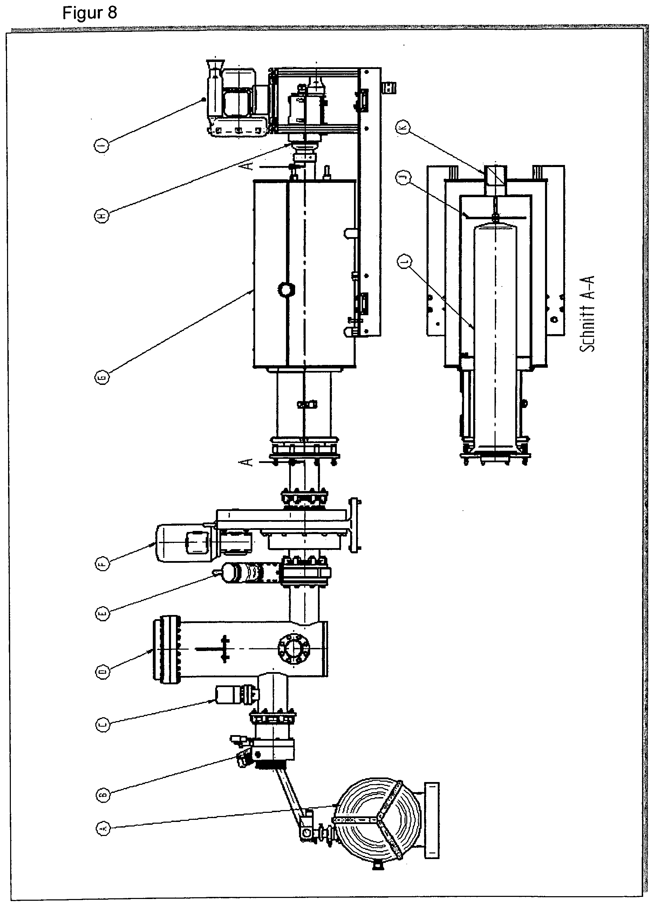

Die Sublimationsapparatur enthält die in Figur 1 schematisch dargestellten Komponenten. Die vollständige Konstruktionszeichnung ist in Figur 8 abgebildet. Dabei bedeuten die einzelnen Komponenten:
A) Vorpumpe zur Erzeugung eines Vorvakuums
B) Turbomolekularpumpe zur Erzeugung eines Hochvakuums
C) Manometer zur Vakuum Messung
D) Kühlfalle, gekühlt mit flüssigem Stickstoff
E) Zugschieber- Ventil, zur Trennung von Sublimationsraum und Pumpenstand
F) Ferrofluidisch abgedichtete Drehdurchführung mit elektrischem Antrieb
G) Heißluftofen bestehend aus einen isolierten V2A-Rohr (Durchmesser 250 mm, Länge 450 mm), versehen mit vier PT100-Thermoelementen zur Temperregelung
H) Lufterhitzer zur Ofenbeheizung
I) Gebläse für Lufterhitzer
J) Prallblech zur Strömungsführung im Ofen
K) Lufteinlass in Ofen
L) Sublimationsgefäß bestehend aus Sublimatoreinheit und Kondensationseinheit

Eine bestimmte Menge der zu sublimierenden Verbindungen MAT1 bis MAT6 wird in der Sublimatoreinheit (**2**) bzw. (L) vorgelegt (s. Beispiel 4, Tabelle 2). Die Sublimatoreinheit wird zusammengefügt und bis zum Basisdruck (s. Beispiel 4, Tabelle 2) evakuiert. Anschließend wird die Rotation zugeschaltet (Umdrehungszahl 1.5 min⁻¹), und es wird mittels des Heißluftofens die Temperatur schrittweise in 50 °C Schritten bis zur in Tabelle 2 angegebenen Sublimationstemperatur erhöht. Nach beendeter Sublimation lässt man die Apparatur auf Raumtemperatur erkalten, hebt das Vakuum auf, entfernt das Sublimat, das sich in der Kondensationseinheit angesammelt hat, mechanisch und führt es der Reinheitsanalytik via NMR bzw. HPLC zu.

### Beispiel 3: Aufbau einer Apparatur zur Durchführung der Trägergassublimation, Apparatur 3

Die Sublimationsapparatur besteht aus den in Figur 2 abgebildeten Komponenten, die hintereinander geschaltet und durch handelsübliche Vakuumwellschläuche mit O-Ring-Flanschen verbunden sind, analog zu Figur 8.

Eine bestimmte Menge der zu sublimierenden Verbindungen MAT4 und MAT6 wird in der Sublimatoreinheit (**2**) vorgelegt (s. Beispiel 4, Tabelle 2). Die Sublimatoreinheit wird zusammengefügt und bis zum Basisdruck (s. Beispiel 4, Tabelle 2) evakuiert, und die Rotation wird zugeschaltet (Umdrehungszahl 1 min⁻¹). Anschließend wird mittels des Heißluftofens die Temperatur schrittweise in 50 °C Schritten bis zur in Tabelle 2 angegebenen Sublimationstemperatur erhöht. Nach Erreichen der Sublimationstemperatur wird der Helium-Trägergasstrom so eingeregelt, dass der angegebene Druck (s. Beispiel 4, Tabelle 2) erreicht wird. Nach beendeter Sublimation lässt man die Apparatur auf Raumtemperatur erkalten, hebt das Vakuum auf, entfernt das Sublimat, das sich in der Kondensationseinheit angesammelt hat, mechanisch und führt es der Reinheitsanalytik via NMR bzw. HPLC zu.

### Beispiel 4: Sublimationen verschiedener organischer und metallorganischer Substanzen

Die folgenden organischen Substanzen MAT1 bis MAT6 (Übersicht Tabelle 1) werden in den oben genannten Apparaturen verdampft und somit gereinigt:

**Tabelle 1: Materialübersicht**

| | Chemische Bezeichnung | Literatur | Schmelzpunkt [°C] | Molgewicht [g/mol] | Reinheit (gem. HPLC) |
|---|---|---|---|---|---|
| MAT1 | 9,10-Bis-(2-spiro-bifluorenyl)-anthracen | WO 04/58911 | 463 | 807.0 | 99.7% |
| MAT2 | Bis-(2-spirobifluorenyl)-keton | WO 04/93207 | 384 | 658.8 | 99.98% |
| MAT3 | 2,2',7,7'-Tetrakis-(bis-p-tolylamino)-spirobifluoren | JP 03/124472 | 296 | 1097.5 | 99.95% |
| MAT4 | Tris(4-(trimethylsilyl-phenylvinyl)-phenyl)amin | DE 102005058543.4 | --- | 768.3 | 99.5% |
| MAT5 | fac-Tris[2-(2-pyridinyl-κN)phenyl-κC]-iridium(III) | WO 02/060910 | Zers. | 768.3 | 99.95 % |
| MAT6 | *fac*-Tris[7,7-dimethyl-8-fluor-4-methyldibenzo-[de,h]chinolin-C², N]-iridium(III) | WO 05/033244 | Zers. | 901.0 | 99.9% |

Eine Übersicht über die durchgeführten Sublimationsversuche ist in Tabelle 2 wiedergegeben.

**Tabelle 2: Sublimationsübersicht**

| No. | Material | Einsatzmenge [g] | Sublimator | Sublimationsbedingungen (T_{Ofen}; p; Phase; Zusatz) | Beobachtungen |
|---|---|---|---|---|---|
| 1 | MAT1 | 200 | **App. 1** (Vergleich) | 450 °C; 4x10⁻⁵ mbar; aus fester Phase | Sublimationszeit: 8 h, Reinheit Sublimat: 99.4 %, Zersetzungsprodukte: 0.3 %. An der Grenze Glaskolben - Sublimationsgut bildet sich mit der Zeit eine Ascheschicht. Auf der Oberfläche des Sublimationsguts bilden sich bis zu mehrere mm große Kristalle. Gegen Ende der Sublimation wird Asche mitgeschleppt, die das Sublimat verunreinigt. |
| 2 | MAT1 | 200 | **App. 2** | 400 °C; 3x10⁻⁵ mbar; aus fester Phase, Zusatz von 150 g Glaskugeln (5 mm Durchmesser) | Sublimationszeit: 1 h 40 min, Reinheit Sublimat: 99.7 %, Zersetzungsprodukte: keine. Es bilden sich weder Asche noch große Kristalle. Die Sublimation verläuft vollständig und ohne Probleme. |
| 3 | MAT2 | 100 | **App. 1** (Vergleich) | 390 °C; 5x10⁻⁵ mbar; aus fester Phase | Sublimationszeit: 2 h 30 min, Reinheit Sublimat: 99.98 %, Zersetzungsprodukte: keine. Geringe Mengen einer Asche / Salze aus der Synthese werden gegen Ende der Sublimation mitgerissen. |
| 4 | MAT2 | 300 | **App. 1** (Vergleich) | 390 °C; 5x10⁻⁵ mbar; aus fester Phase | Sublimationszeit: 7 h 30 min, Reinheit Sublimat: 99.98 %, Zersetzungsprodukte: keine. Das Sublimat scheidet sich bevorzugt am Übergang des beheizten zum nicht beheizten Bereich ab. Das Kolbeninnere wächst langsam von Rand her zu. Nach 5 h droht ein Verschluss auf dem vollen Kolbenquerschnitt. Die Sublimation muss abgebrochen werden. |
| 5 | MAT2 | 1000 | **App. 2** | 375 °C; 3x10⁻⁵ mbar; aus fester Phase; Zusatz von 500 g Glaskugeln (5 mm Durchmesser) | Sublimationszeit: 6 h 30 min, Reinheit Sublimat: 99.98 %, Zersetzungsprodukte: keine. Die Sublimation verläuft vollständig und ohne Probleme. In der Sublimatoreinheit verbleibt wenig Asche / Salze aus der Synthese. Diese werden nicht in das Sublimat verschleppt. |
| 6 | MAT3 | 50 | **App. 1** (Vergleich) | 390 °C; 3x10⁻⁵ mbar; aus flüssiger Phase | Sublimationszeit: 7 h, Reinheit Sublimat: 99.75 %, Zersetzungsprodukte: 0.2 %. Nach Aufschmelzen bei 305 °C werden Lösemittelreste aus der Umristallisation frei. Diese führen zu Siedeverzügen und Spritzen. Die Kondenstionsfläche wird durch Spritzer kontaminiert. Nach Sublimation von ca. 30 g ist der Wärmeabtransport an der Kondensationsfläche so schecht, dass das Kondensat sich nicht mehr verfestigt und an der Kolbenwand zurückläuft. |
| 7 | MAT3 | 500 | **App. 2** | 380 °C; 4x10⁻⁵ mbar; aus flüssiger Phase | Sublimationszeit: 3 h, Reinheit Sublimat: 99.95 %, Zersetzungsprodukte: keine. Bei 305 °C schmilzt das Material auf. Der Druck steigt durch freigesetzes Restlösemittel für 20 min. bis auf 1x10⁻² mbar an. Es treten jedoch keine Siedeverzüge und damit kein Spritzen auf. Die eigentliche Sublimation bei 380 °C verläuft vollständig und ohne Probleme. |
| 8 | MAT4 | 50 | **App. 1** (Vergleich) | 320 °C; 3x10⁻⁵ mbar; aus flüssiger Phase | Sublimationszeit: 7 h, Reinheit Sublimat: 96 %, Zersetzungsprodukte: 4 %. Nach Aufschmelzen bei 220 °C werden Lösemittelreste aus der Umristallisation frei. Diese führen zu Siedeverzügen und Spritzen. Die Kondenstionsfläche wird durch Spritzer kontaminiert. Nach Sublimation von ca. 30 g ist der Wärmeabtransport an der Kondensationsfläche so schecht, dass das Kondensat sich nicht mehr verfestigt und an der Kolbenwand zurückläuft. Durch die hohe Sublimationstemperatur und -zeit tritt erhebliche Zersetzung auf, wobei unter anderen 4,4'-Bis(trimethylsilyl)stilben gebildet wird, welches das Sublimat verunreinigt. |
| 9 | MAT4 | 200 | **App. 3** | 240 °C; 2x10⁻³ mbar; aus flüssiger Phase | Sublimationszeit: 2 h 20 min, Reinheit Sublimat: 99.5 %, Zersetzungsprodukte: keine. Bei 220 °C schmilzt das Material auf. Der Druck steigt durch freigesetzes Restlösemittel für 15 min. bis auf 5x10⁻² mbar an und fällt dann wieder auf 5x10⁻⁵mbar ab. Es treten keine Siedeverzüge und damit kein Spritzen auf. Die eigentlich Sublimation verläuft bei 240 °C und einem Helium-Trägergasstrom, der so eingestellt wird, dass der Druck konstant bei 8x10⁻⁴ mbar bleibt. Die Sublimation verläuft vollständig und ohne Probleme. Die Bildung von 4,4'-Bis(trimethylsilyl)stilben wird nicht beobachtet. |
| 10 | MAT5 | 50 | **App. 1** (Vergleich) | 330 °C; 5X10⁻⁵ mbar; aus fester Phase | Sublimationszeit: 5 h, Reinheit Sublimat: 98.6 %, Zersetzungsprodukte: 2.3 %. An der Grenze Glaskolben - Sublimationsgut bildet sich mit der Zeit eine Ascheschicht. Die Temperatur muss von 330 °C sukzessive auf 360 °C gesteigert werden, um eine akzeptable Sublimationsrate zu gewährleisten. Auf der Oberfläche des Sublimationsguts bilden sich bis zu mehrere mm große Kristalle. Es wird Asche mitgeschleppt, die das Sublimat verunreinigt. Nach Sublimation von ca. 35 g wird die Sublimation abqebrochen. |
| 11 | MAT5 | 150 | **App. 2** | 330 °C; 5x10⁻⁵ mbar; aus fester Phase; Zusatz von 100 g Glaskugeln (5 mm Durchmesser) | Sublimationszeit: 1 h 40 min, Reinheit Sublimat: 99.95 %, Zersetzungsprodukte: keine. Es bilden sich weder Asche noch große Kristalle. Die Sublimation verläuft vollständig und ohne Probleme. |
| 12 | MAT6 | 10 | **App. 1** (Vergleich) | 390 °C; 5x10⁻⁵ mbar; aus fester Phase | Sublimationszeit: 5 h, Reinheit Sublimat: 97.2 %, Zersetzungsprodukte: 2.7 %. An der Grenze Glaskolben - Sublimationsgut bildet sich mit der Zeit eine Ascheschicht. Die Temperatur muss von 390 °C sukzessive auf 420 °C gesteigert werden, um eine akzeptable Sublimationsrate zu gewährleisten. Auf der Oberfläche des Sublimationsguts bilden sich bis zu mehrere mm große Kristalle. Es wird Asche mitgeschleppt, die das Sublimat verunreinigt. Nach Sublimation von ca. 6 g wird die Sublimation abgebrochen. Der Rückstand besteht aus einer Iridiumhaltiqen Asche. |
| 13 | MAT6 | 50 | **App. 3** | 350 °C; 7x10⁻⁴ mbar; aus fester Phase; Zusatz von 150 g Glaskugeln (5 mm Durchmesser) | Sublimationszeit: 2 h 30 min, Reinheit Sublimat: 99.9 %, Zersetzungsprodukte: keine. Der Helium-Trägergasstrom wird so eingestellt, dass der Druck konstant bei 7x10⁻⁴ mbar bleibt. Die Sublimation verläuft vollständig und ohne Probleme. |

Die beschriebenen Versuche zeigen, dass sich mit dem Verfahren (Apparate 2 und 3) die Substanzen deutlich schneller, im größeren Maßstab und mit erheblich weniger Nebenreaktion bzw. Zersetzung sublimieren lassen. Für manche der oben gezeigten Substanzen wird erst durch das erfindungsgemäße Verfahren die Sublimation überhaupt ermöglicht.

### Beispiel 5: Verwendung des Verfahrens zur Isomerentrennung

Die teilweise oder vollständige Trennung von Atropisomeren einer Verbindung kann nach dem Verfahren durchgeführt werden, wie nachfolgend an den Atropisomeren von 9,10-Bis(4-methylnaphth-1-yl)anthracen (WO 06/048268) ausgeführt ist. 100 g eines 1:1 Atropisomerengemischs von 9,10-Bis(4-methylnaphth-1-yl)anthracen werden in Apparatur 3 bei T = 280 °C und p = 9x10⁻⁴ mbar aus fester Phase unter Zusatz von 200 g Glaskugeln (5 mm Durchmesser) sublimiert. Nach ca. 50 % Massendurchsatz, entsprechend 50 g Sublimat und 50 g Rückstand, wird die Sublimation beendet. Das Atropisomerenverhältnis im Sublimat beträgt ca. 2.3:1.0 bezüglich des leichter flüchtigen Atropisomeren, das des Rückstands ca. 1.0:2.3 bezüglich der schwerer flüchtigen Isomeren. Die Bestimmung des Atropisomerenverhältnisses des Sublimats und des Rückstands erfolgte nach WO 06/048268. Durch wiederholte Sublimation des Sublimats und Abbruch nach jeweils 50 % Massendurchsatz lässt sich das leichter flüchtige Atropisomere im Sublimat stark anreichern. Verhältnisse von größer 20:1 sind so leicht darstellbar. Durch Massendurchsätze von 80 % und mehr lässt sich das schwerer flüchtige Atropisomere im Rückstand stark anreichern. Verhältnisse von größer 1:20 sind so leicht darstellbar.

### Beispiel 6: Verwendung des Verfahrens zur Sublimation im großen Maßstab

Die folgenden Beispiele zeigen, dass die Sublimation nach dem Verfahren und in der Apparatur auch im Kilogramm-Maßstab durchgeführt werden kann. Dazu sind im Folgenden jeweils die eingesetzten Materialien, die Parameter des Sublimationsverfahren sowie die Ausbeute und Reinheit nach der Sublimation angegeben. Die Rotation wird nach dem Hochheizen zugeschaltet.

### Beispiel 6a:

Material: MAT7 (Triaryl-monoaminderivat mit einem Molekulargewicht von ca. 670 g/mol); Reinheit 99.83%
Befüllung: 5000 g
Temperatur: 285 °C
Enddruck: < 10⁻⁶ mbar
Rotation Umdrehungszahl: 1 min⁻¹
Dauer der Sublimation: 13.5 h
Ausbeute (Reinheit): Fraktion 1: 4500 g (99.97%), Fraktion 2: 300 g (99.97%).
Eine zweite Sublimation erhöht die Reinheit auf >99.99%.

### Beispiel 6b:

Material: MAT8 (Triaryl-monoaminderivat mit einem Molekulargewicht von ca. 670 g/mol); Reinheit 99.88%
Befüllung: 5500 g
Temperatur: 300 °C
Enddruck: < 10⁻⁶ mbar
Rotation Umdrehungszahl: 2 min⁻¹
Dauer: 17 h
Ausbeute (Reinheit): Fraktion 1: 4690 g (99.99%), Fraktion 2: 580 g (99.94%).
Eine zweite Sublimation der Fraktion 2 erhöht die Reinheit auf > 99.99%.

### Beispiel 6c:

Material: MAT9 (2,4,6-Triaryl-1,3,5-triazinderivat mit einem Molekulargewicht von ca. 590 g/mol); Reinheit 99.41 %
Befüllung: 5000 g
Temperatur: 310 °C
Enddruck: < 10⁻⁶ mbar
Rotation Umdrehungszahl: 4 min⁻¹
Dauer: 13 h
Ausbeute (Reinheit): Fraktion 1: 4430 g (99.96%), Fraktion 2: 140 g (99.98%).
Eine zweite Sublimation erhöht die Reinheit auf >99.99%.

## Patentansprüche

1. Apparatur zur Sublimation chemischer Verbindungen, enthaltend einen Ofen (**1**), eine Sublimatoreinheit (**2**), eine Kondensationseinheit (**3**), die mit der Sublimatoreinheit in Kontakt steht, einen Rotationsantrieb (**4**) zur Rotation der Sublimator- und der Kondensationseinheit und eine Vakuumpumpe bzw. ein Vakuumpumpensystem (**6**), **dadurch gekennzeichnet, dass** die Apparatur zwischen dem rotierenden Teil und dem feststehenden Teil eine Rotationskupplung (**5**) aufweist, welche ausgewählt ist aus einer ferrofluidisch abgedichteten Drehdurchführung oder einer doppelt bzw. dreifach wirkenden Gleitringdichtung und dass die Sublimatoreinheit (**2**) und die Kondensationseinheit (**3**) von einem Rohr umgeben sind und das Vakuum an das umgebende Rohr angelegt wird.

2. Apparatur nach Anspruch 1, **dadurch gekennzeichnet, dass** es sich bei dem Ofen um einen Heißluftofen oder einen Strahlungsofen handelt.

3. Apparatur nach Anspruch 1 oder 2, **dadurch gekennzeichnet, dass** sie mehrere Kondensationseinheiten aufweist, die unterschiedlich temperiert werden können.

4. Apparatur nach einem oder mehreren der Ansprüche 1 bis 3, **dadurch gekennzeichnet, dass** der Rotationsantrieb in die Rotationskupplung integriert ist.

5. Apparatur nach einem oder mehreren der Ansprüche 1 bis 4, **dadurch gekennzeichnet, dass** das Vakuumpumpensystem aus einem mehrstufigen System besteht, umfassend eine Vorpumpe, insbesondere eine Ölpumpe oder eine trockenlaufende Scrollpumpe, eine Drehschieberpumpe oder eine Rootspumpe, und eine Hochvakuumpumpe, insbesondere eine Turbomolekularpumpe oder eine Öldiffusionspumpe.

6. Apparatur nach einem oder mehreren der Ansprüche 1 bis 5, **dadurch gekennzeichnet, dass** die Sublimator- und die Kondensationseinheit waagerecht angeordnet sind oder dass die Sublimator- und Kondensationseinheit gegenüber der Waagrechten geneigt sind, wobei ein Winkel von 1 bis 10° bevorzugt ist.

7. Verfahren zur Reinigung von bei Raumtemperatur festen chemischen Stoffen (Sublimationsgut), wobei der Stoff im Vakuum erhitzt, in die Gasphase überführt und anschließend kondensiert wird, **dadurch gekennzeichnet, dass** das Gefäß, welches das Sublimationsgut enthält, und die Kondensationseinheit rotieren und dass das Verfahren in einer Apparatur durchgeführt wird, die zwischen dem rotierenden Teil und dem statischen Teil eine Rotationskupplung aufweist, welche ausgewählt ist aus einer ferrofluidisch abgedichteten Drehdurchführung oder einer doppelt bzw. dreifach wirkenden Gleitringdichtung, wobei das Verfahren in einer Apparatur nach einem oder mehreren der Ansprüche 1 bis 6 durchgeführt wird.

8. Verfahren nach Anspruch 7, **dadurch gekennzeichnet, dass** das Sublimationsgut aus dem festen Zustand oder aus der Schmelze in die Gasphase überführt wird und dass die Kondensation in die feste oder in die flüssige Phase erfolgt.

9. Verfahren nach Anspruch 7 oder 8, **dadurch gekennzeichnet, dass** es bei einem Druck von 10⁻³ bis 10⁻⁷ mbar, bevorzugt von 10⁻⁴ bis 10⁻⁶ mbar durchgeführt wird.

10. Verfahren nach einem oder mehreren der Ansprüche 7 bis 9, **dadurch gekennzeichnet, dass** das Sublimationsgut ein Molekulargewicht im Bereich von 300 bis 5000 g/mol, bevorzugt von 400 bis 2500 g/mol, besonders bevorzugt im Bereich von 450 bis 1500 g/mol aufweist.

11. Verfahren nach einem oder mehreren der Ansprüche 7, 8 oder 10, **dadurch gekennzeichnet, dass** das Verfahren unter Verwendung eines Trägergases in einem Druckbereich von 10⁻¹ bis 10⁻⁴ mbar durchgeführt wird.

12. Verfahren nach einem oder mehreren der Ansprüche 7 bis 11, **dadurch gekennzeichnet, dass** das Verfahren halbkontinuierlich durchgeführt wird und dass neues Sublimationsgut bevorzugt in der Schmelze in die Sublimatoreinheit zugeführt wird.

13. Verfahren nach einem oder mehreren der Ansprüche 7 bis 12, **dadurch gekennzeichnet, dass** die Rotationsgeschwindigkeit im Bereich von 0.5 bis 100 min⁻¹, bevorzugt im Bereich von 1 bis 20 min⁻¹, besonders bevorzugt im Bereich von 1.5 bis 10 min⁻¹ liegt.

14. Verfahren nach einem oder mehreren der Ansprüche 7 bis 13, **dadurch gekennzeichnet, dass** das Sublimationsgut bei einer Temperatur im Bereich von 200 °C bis 500 °C, bevorzugt im Bereich von 250 °C bis 450 °C, besonders bevorzugt im Bereich von 250 °C bis 400 °C in die Gasphase überführt wird.

## Claims

1. Apparatus for the sublimation of chemical compounds, comprising an oven (**1**), a sublimer unit (**2**), a condensation unit (**3**), which is in contact with the sublimer unit, a rotation drive (**4**) for rotation of the sublimer unit and condensation unit, and a vacuum pump or vacuum-pump system (**6**), **characterised in that** the apparatus has, between the rotating part and the fixed part, a rotation coupling (**5**), which is selected from a rotary feedthrough with ferrofluidic seal or a double- or triple-acting mechanical face seal and **in that** the sublimer unit (**2**) and the condensation unit (**3**) are surrounded by a tube and the vacuum is applied to the surrounding tube.

2. Apparatus according to Claim 1, **characterised in that** the oven is a hot-air oven or a radiation oven.

3. Apparatus according to Claim 1 or 2, **characterised in that** it has a plurality of condensation units, which can be heated to different temperatures.

4. Apparatus according to one or more of Claims 1 to 3, **characterised in that** the rotation drive is integrated into the rotation coupling.

5. Apparatus according to one or more of Claims 1 to 4, **characterised in that** the vacuum-pump system consists of a multistage system comprising a pre-pump, in particular an oil pump or a dry-running scroll pump, a rotary vane pump or a Roots pump, and a high-vacuum pump, in particular a turbomolecular pump or an oil diffusion pump.

6. Apparatus according to one or more of Claims 1 to 5, **characterised in that** the sublimer unit and the condensation unit are arranged horizontally or **in that** the sublimer unit and condensation unit are tilted with respect to the horizontal, with an angle of 1 to 10° being preferred.

7. Method for the purification of chemical substances which are solid at room temperature (sublimation material), where the substance is heated in vacuo, converted into the gas phase and subsequently condensed, **characterised in that** the vessel containing the sublimation material and the condensation unit rotate and **in that** the method is carried out in an apparatus which has, between the rotating part and the static part, a rotation coupling which is selected from a rotary feedthrough with ferrofluidic seal or a double- or triple-acting mechanical face seal, where the method is carried out in an apparatus according to one or more of Claims 1 to 6.

8. Method according to Claim 7, **characterised in that** the sublimation material is converted into the gas phase from the solid state or from the melt and **in that** the condensation takes place into the solid phase or into the liquid phase.

9. Method according to Claim 7 or 8, **characterised in that** it is carried out at a pressure of 10⁻³ to 10⁻⁷ mbar, preferably 10⁻⁴ to 10⁻⁶ mbar.

10. Method according to one or more of Claims 7 to 9, **characterised in that** the sublimation material has a molecular weight in the range from 300 to 5000 g/mol, preferably from 400 to 2500 g/mol, particularly preferably in the range from 450 to 1500 g/mol.

11. Method according to one or more of Claims 7, 8 or 10, **characterised in that** the method is carried out using a carrier gas in a pressure range from 10⁻¹ to 10⁻⁴ mbar.

12. Method according to one or more of Claims 7 to 11, **characterised in that** the method is carried out semi-continuously and **in that** fresh sublimation material is preferably fed into the sublimer unit in the melt.

13. Method according to one or more of Claims 7 to 12, **characterised in that** the rotational speed is in the range from 0.5 to 100 min⁻¹, preferably in the range from 1 to 20 min⁻¹, particularly preferably in the range from 1.5 to 10 min⁻¹.

14. Method according to one or more of Claims 7 to 13, **characterised in that** the sublimation material is converted into the gas phase at a temperature in the range from 200°C to 500°C, preferably in the range from 250°C to 450°C, particularly preferably in the range from 250°C to 400°C.

## Revendications

1. Appareil pour la sublimation de composés chimiques, comprenant un four (**1**), une unité de dispositif de sublimation (**2**), une unité de condensation (**3**), laquelle est en contact avec l'unité de dispositif de sublimation, une unité d'entraînement en rotation (**4**) pour entraîner en rotation l'unité de dispositif de sublimation et l'unité de condensation, et une pompe à vide ou un système de pompe à vide (**6**), **caractérisé en ce que** l'appareil comporte, entre la partie entraînée en rotation et la partie fixe, un couplage de rotation (**5**), lequel est sélectionné parmi un passage tournant avec une étanchéité ferrofluidique ou une étanchéité faciale à double ou triple action et **en ce que** l'unité de dispositif de sublimation (**2**) et l'unité de condensation (**3**) sont entourées par un tube et le vide est appliqué sur le tube d'entourage.

2. Appareil selon la revendication 1, **caractérisé en ce que** le four est un four à air chaud ou un four à chaleur radiante.

3. Appareil selon la revendication 1 ou 2, **caractérisé en ce qu'**il comporte une pluralité d'unités de condensation, lesquelles peuvent être chauffées à des températures différentes.

4. Appareil selon une ou plusieurs des revendications 1 à 3, **caractérisé en ce que** l'unité d'entraînement en rotation est intégrée à l'intérieur du couplage de rotation.

5. Appareil selon une ou plusieurs des revendications 1 à 4, **caractérisé en ce que** le système de pompe à vide est constitué par un système à multiples étages qui comprend une pré-pompe, en particulier une pompe à huile ou une pompe à spirale fonctionnant à sec, une pompe rotative à ailettes/palettes ou une pompe Roots, et une pompe à vide poussé, en particulier une pompe turbomoléculaire ou une pompe de diffusion d'huile.

6. Appareil selon une ou plusieurs des revendications 1 à 5, **caractérisé en ce que** l'unité de dispositif de sublimation et l'unité de condensation sont agencées horizontalement ou **en ce que** l'unité de dispositif de sublimation et l'unité de condensation sont inclinées par rapport à l'horizontale, un angle de 1 à 10° ayant la préférence.

7. Procédé pour la purification de substances chimiques qui sont solides à température ambiante (matériau de sublimation), selon lequel la substance est chauffée sous vide, est convertie selon la phase gazeuse et est ensuite condensée, **caractérisé en ce que** la cuve qui contient le matériau de sublimation et l'unité de condensation sont entraînées en rotation et **en ce que** le procédé est mis en oeuvre dans un appareil qui comporte, entre la partie entraînée en rotation et la partie statique, un couplage de rotation, lequel est sélectionné parmi un passage tournant avec une étanchéité ferrofluidique ou une étanchéité faciale à double ou triple action, dans lequel le procédé est mis en oeuvre dans un appareil selon une ou plusieurs des revendications 1 à 6.

8. Procédé selon la revendication 7, **caractérisé en ce que** le matériau de sublimation est converti selon la phase gazeuse à partir de l'état solide ou à partir de l'état fondu et **en ce que** la condensation se déroule selon la phase solide ou selon la phase liquide.

9. Procédé selon la revendication 7 ou 8, **caractérisé en ce qu'**il est mis en oeuvre à une pression de 10⁻³ à 10⁻⁷ mbar, de préférence de 10⁻⁴ à 10⁻⁶ mbar.

10. Procédé selon une ou plusieurs des revendications 7 à 9, **caractérisé en ce que** le matériau de sublimation présente un poids moléculaire dans la plage de 300 à 5000 g/mol, de préférence de 400 à 2500 g/mol, de façon particulièrement préférable dans la plage de 450 à 1500 g/mol.

11. Procédé selon une ou plusieurs des revendications 7, 8 ou 10, **caractérisé en ce que** le procédé est mis en oeuvre en utilisant un gaz porteur dans une plage de pressions de 10⁻¹ à 10⁻⁴ mbar.

12. Procédé selon une ou plusieurs des revendications 7 à 11, **caractérisé en ce que** le procédé est mis en oeuvre de manière semi-continue et **en ce que** du matériau de sublimation frais est de préférence alimenté à l'intérieur de l'unité de dispositif de sublimation selon l'état fondu.

13. Procédé selon une ou plusieurs des revendications 7 à 12, **caractérisé en ce que** la vitesse de rotation est dans la plage de 0,5 à 100 min⁻¹, de préférence dans la plage de 1 à 20 min⁻¹, de façon particulièrement préférable dans la plage de 1,5 à 10 min⁻¹.

14. Procédé selon une ou plusieurs des revendications 7 à 13, **caractérisé en ce que** le matériau de sublimation est converti selon la phase gazeuse à une température dans la plage de 200°C à 500°C, de préférence dans la plage de 250°C à 450°C, de façon particulièrement préférable dans la plage de 250°C à 400°C.
